# EUROPEAN PATENT APPLICATION

(11) **EP 4 482 201 A1**
(43) Date of publication of application: **25.12.2024**
(21) Application number: 22926009.6
(22) Date of filing: 14.02.2022
(51) Int. Cl.: H04W 24/10

(54) **TERMINAL, WIRELESS COMMUNICATION METHOD, AND BASE STATION**

(71) Applicant: NTT DOCOMO, INC., Tokyo 100-6150 (JP)
(72) Inventor: ECHIGO, Haruhi, Tokyo 100-6150 (JP); HARADA, Hiroki, Tokyo 100-6150 (JP); MATSUMURA, Yuki, Tokyo 100-6150 (JP); SHIBAIKE, Naoya, Tokyo 100-6150 (JP); PI, Qiping, Beijing, 100190 (CN); ZHENG, Xufei, Beijing, 100190 (CN)
(74) Representative: Hoffmann Eitle
(86) International application number: PCT/JP2022/005766
(87) International publication number: WO 2023/152990

(57) **Abstract**

A terminal according to one aspect of the present disclosure includes: a receiving section that receives a reference signal for channel state information (CSI) measurement at each of a plurality of occasions; and a control section that controls derivation of a CSI report including pieces of CSI corresponding to the plurality of respective occasions. According to one aspect of the present disclosure, preferable overhead reduction/channel estimation/resource use can be achieved.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication technologies, it is studied to utilize artificial intelligence (AI) technologies, such as machine learning (ML), for network/device control, management, and the like. For example, for future radio communication technologies, it is studied to utilize AI technologies for improvement of channel state information (Channel State Information Reference Signal (CSI)) feedback, for example, overhead reduction, accuracy improvement, prediction, and the like. CSI feedback based on an AI technology may be referred to as AI-aided CSI feedback.

However, study about concrete contents of AI-aided CSI feedback has not advanced yet. Unless these are appropriately defined, appropriate overhead reduction/highly accurate channel estimation/highly efficient use of resources cannot be achieved, which may suppress improvement of communication throughput/communication quality.

Thus, an object of the present disclosure is to provide a terminal, a radio communication method, and a base station that can achieve preferable overhead reduction/channel estimation/resource use. Solution to Problem

A terminal according to one aspect of the present disclosure includes: a receiving section that receives a reference signal for channel state information (CSI) measurement at each of a plurality of occasions; and a control section that controls derivation of a CSI report including pieces of CSI corresponding to the plurality of respective occasions.

### Advantageous Effects of Invention

According to one aspect of the present disclosure, preferable overhead reduction/channel estimation/resource use can be achieved.

### Brief Description of Drawings

[FIG. 1] FIG. 1A and FIG. 1B are diagrams to show an example of RRC information elements related to a CSI report configuration and a CSI resource configuration.
[FIG. 2] FIG. 2A and FIG. 2B are diagrams to show examples of RRC information elements related to an NZP CSI-RS resource set and a CSI-SSB resource set.
[FIG. 3] FIG. 3 is a diagram to show an example of RRC information elements related to a TCI state.
[FIG. 4] FIG. 4 is an extract of an RRC information element "CSI-ReportConfig."
[FIG. 5] FIG. 5 is a diagram to show an example of a CSI report in Rel-15 NR.
[FIG. 6] FIG. 6 is a diagram to show examples of a CSI report number.
[FIG. 7] FIG. 7 is a diagram to show associations related to differential RSRPs in Rel. 15/16.
[FIG. 8] FIG. 8 is a diagram to show examples of determination of a CSI-RS for computation of CSI based on a CSI reference resource in an existing NR standard.
[FIG. 9] FIG. 9 is a diagram to show an example of CSI reporting for a plurality of time instances.
[FIG. 10] FIG. 10A is a diagram to show an example of derivation of pieces of CSI according to choice 0-1. FIG. 10B is a diagram to show an example of derivation of pieces of CSI according to choice 0-2.
[FIG. 11] FIG. 11 is a diagram to show an example of derivation of pieces of CSI according to option 0-2.
[FIG. 12] FIG. 12A is a diagram to show an example of a structure of CSI reports according to choice 1-1. FIG. 12B is a diagram to show an example of a structure of CSI reports according to choice 1-2.
[FIG. 13] FIG. 13A and FIG. 13B are diagrams to show examples of a structure of a CSI report according to option 2-1.
[FIG. 14] FIG. 14 is a diagram to show an example of change of an SSBRI reaching the largest RSRP.
[FIG. 15] FIG. 15 is a diagram to show an example of structures of a CSI report according to option 2-1-1.
[FIG. 16] FIG. 16A is a diagram to show an example of a structure of a CSI report according to option 2-1-2-1. FIG. 16B is a diagram to show an example of a structure of a CSI report according to option 2-1-2-2.
[FIG. 17] FIG. 17 is a diagram to show examples of ordering of RSRPs/SINRs according to option 2-2-1.
[FIG. 18] FIG. 18 is a diagram to show examples of ordering of RSRPs/SINRs according to option 2-2-2.
[FIG. 19] FIG. 19A and FIG. 19B are diagrams to show examples of selection of an RS to report according to aspect 2-4.
[FIG. 20] FIG. 20 is a diagram to show an example of an RRC parameter indicating selection policy according to aspect 2-4.
[FIG. 21] FIG. 21 is a diagram to show an example of a structure of a CSI report according to choice 3-1.
[FIG. 22] FIG. 22 is a diagram to show an example of a structure of a CSI report according to choice 3-2.
[FIG. 23] FIG. 23 is a diagram to show an example of a structure of a CSI report according to option 3-1-2.
[FIG. 24] FIG. 24 is a diagram to show examples of derivation of differential RSRPs according to option 3-1-3.
[FIG. 25] FIG. 25 is a diagram to show other examples of the derivation of differential RSRPs according to option 3-1-3.
[FIG. 26] FIG. 26 is a diagram to show an example of associations related to differential RSRPs/SINRs according to aspect 3-2.
[FIG. 27] FIG. 27 is a diagram to show another example of the associations related to differential RSRPs/SINRs according to aspect 3-2.
[FIG. 28] FIG. 28 is a diagram to show an example of determination of CSI-RS resource occasions according to option 4-1.
[FIG. 29] FIG. 29 is a diagram to show an example of determination of CSI-RS resource occasions according to option 4-2.
[FIG. 30] FIG. 30 is a diagram to show an example of determination of CSI-RS resource occasions according to option 4-3.
[FIG. 31] FIG. 31 is a diagram to show an example of determination of CSI-RS resource occasions according to option 5-1.
[FIG. 32] FIG. 32 is a diagram to show an example of a schematic structure of a radio communication system according to one embodiment.
[FIG. 33] FIG. 33 is a diagram to show an example of a structure of a base station according to one embodiment.
[FIG. 34] FIG. 34 is a diagram to show an example of a structure of a user terminal according to one embodiment.
[FIG. 35] FIG. 35 is a diagram to show an example of a hardware structure of the base station and the user terminal according to one embodiment.
[FIG. 36] FIG. 36 is a diagram to show an example of a vehicle according to one embodiment.

### Description of Embodiments

### (CSI)

In NR, a UE uses a reference signal (or a resource for the reference signal) to measure a channel state and feeds back (reports) channel state information (CSI) to a network (for example, a base station).

The UE may use at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like to measure a channel state.

A CSI-RS resource may include at least one of a non-zero power (NZP) CSI-RS resource, a zero power (ZP) CSI-RS resource, and a CSI interference measurement (CSI-IM) resource.

A resource for measuring a signal component for CSI may be referred to as a signal measurement resource (SMR), a channel measurement resource (CMR), and the like. The SMR (CMR) may include, for example, the NZP CSI-RS resource, SSB, and the like for channel measurement.

A resource for measuring an interference component for CSI may be referred to as an interference measurement resource (IMR). The IMR may include, for example, at least one of an NZP CSI-RS resource, an SSB, a ZP CSI-RS resource, and a CSI-IM resource for interference measurement.

The SS/PBCH block is a block including a synchronization signal (for example, a primary synchronization signal (PSS), a secondary synchronization signal (SSS)), and a PBCH (and a corresponding DMRS), and may be referred to as an SS block (SSB) and the like.

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The CSI may have a plurality of parts. CSI part 1 may include information with a relatively small number of bits (for example, the RI). CSI part 2 may include information with a relatively large number of bits (for example, the CQI) such as information defined based on CSI part 1.

The CSI may be classified into several CSI types. The information type to report, size, and the like may differ depending on CSI type. For example, a CSI type configured for performing communication using a single beam (also referred to as type 1 (type I) CSI and CSI for single beam) and a CSI type configured for performing communication using multi-beam (also referred to as type 2 (type II) CSI, CSI for multi-beam, and the like) may be defined. Utilization purposes of the CSI types are not limited to these.

A CSI feedback method may be at least one of periodic CSI (P-CSI) reporting, aperiodic CSI (A-CSI) reporting, and semi-persistent CSI (SP-CSI) reporting.

The UE may be notified of CSI measurement configuration information by higher layer signaling or physical layer signaling, or a combination of these.

The CSI measurement configuration information may be configured by using an RRC information element "CSI-MeasConfig," for example. The CSI measurement configuration information may include CSI resource configuration information (RRC information element "CSI-ResourceConfig"), CSI report configuration information (RRC information element "CSI-ReportConfig"), and the like. The CSI resource configuration information relates to a resource for CSI measurement, and the CSI report configuration information relates to how a UE carries out CSI reporting.

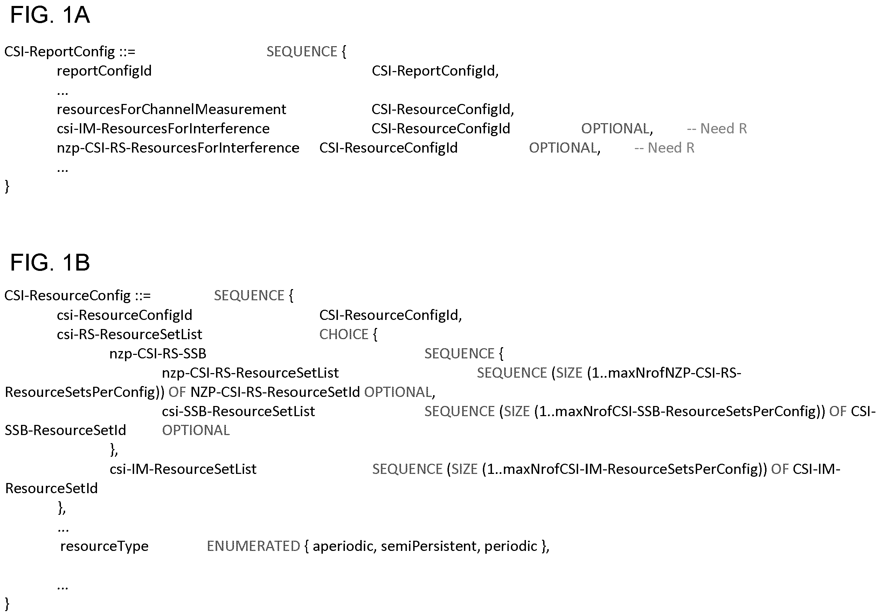

FIG. 1A and FIG. 1B are diagrams to show an example of RRC information elements related to a CSI report configuration and a CSI resource configuration. In this example, an extract of fields (which may be referred to as parameters) included in each information element is shown. FIGS. 1A and 1B provide descriptions using the ASN.1 (Abstract Syntax Notation One) notation. Note that drawings related to other RRC information elements (or RRC parameters) in the present disclosure are also described in a similar notation.

As shown in FIG. 1A, CSI report configuration information ("CSI-ReportConfig") includes resource information for channel measurement ("resourcesForChannelMeasurement"). The CSI report configuration information may also include resource information for interference measurement (for example, NZP CSI-RS resource information for interference measurement ("nzp-CSI-RS-ResourcesForInterference"), CSI-IM resource information for interference measurement ("csi-IM-ResourcesForInterference"), and the like). These pieces of resource information correspond to IDs (Identifiers) of CSI resource configuration information ("CSI-ResourceConfigId").

Note that one or a plurality of the IDs of pieces of CSI resource configuration information (which may be referred to as CSI resource configuration IDs) corresponding to the respective pieces of resource information may take the same value or may take different values.

As shown in FIG. 1B, CSI resource configuration information ("CSI-ResourceConfig") may include a CSI resource configuration information ID, CSI-RS resource set list information ("csi-RS-ResourceSetList"), a resource type ("resourceType"), and the like. The CSI-RS resource set list may include at least one of information of NZP CSI-RS and SSB for measurement ("nzp-CSI-RS-SSB") and CSI-IM resource set list information ("csi-IM-ResourceSetList") .

The resource type indicates the behavior of this resource configuration in the time domain and may be configured at "aperiodic," "semi-persistent," or "periodic." For example, CSI-RSs corresponding to the respective behaviors may be referred to as an A-CSI-RS, an SP-CSI-RS, and a P-CSI-RS.

Note that the resource for channel measurement may be used for computation of a CQI, a PMI, an L1-RSRP, and the like, for example. The resource for interference measurement may be used for computation of an L1-SINR, an L1-SNR, an L1-RSRQ, and any other indicator related to interference.

When interference measurement is performed by CSI-IM, CSI-RSs for channel measurement may be associated with CSI-IM resources from a viewpoint of resources, based on the order of CSI-RS resources and CSI-IM resources in a corresponding resource set.

"nzp-CSI-RS-SSB" may include NZP CSI-RS resource set list information ("nzp-CSI-RS-ResourceSetList") and SSB resource set list information for CSI measurement ("csi-SSB-ResourceSetList"). Each of these pieces of list information may correspond to one or more NZP CSI-RS resource set IDs ("NZP-CSI-RS-ResourceSetId") and CSI-SSB resource set IDs ("CSI-SSB-ResourceSetId") and may be used to identify a measurement target resource(s).

The NZP CSI-RS resource set list information ("nzp-CSI-RS-ResourceSetList") includes NZP CSI-RS resource set IDs ("NZP-CSI-RS-ResourceSetId") of a maximum number of NZP CSI-RS resource sets per CSI resource configuration ("maxNrofNZP-CSI-RS-ResourceSetsPerConfig"). The maximum number of NZP CSI-RS resource sets per CSI resource configuration ("maxNrofNZP-CSI-RS-ResourceSetsPerConfig") may be 16 at maximum when the resource type is "aperiodic" and may be one otherwise (when the resource type is "semi-persistent" or "periodic").

The SSB resource set list information for CSI measurement ("csi-SSB-ResourceSetList") may include CSI-SSB resource set IDs ("CSI-SSB-ResourceSetId") of a maximum number of SSB resource sets for CSI measurement per CSI resource configuration ("maxNrofCSI-SSB-ResourceSetsPerConfig"). The maximum number of SSB resource sets for CSI measurement per CSI resource configuration ("maxNrofCSI-SSB-ResourceSetsPerConfig") may be one.

The CSI-IM resource set list information ("csi-IM-ResourceSetList") may include CSI-IM resource set IDs ("CSI-IM-ResourceSetId") of a maximum number of CSI-IM resource sets per CSI resource configuration ("maxNrofCSI-IM-ResourceSetsPerConfig"). The maximum number of CSI-IM resource sets per CSI resource configuration ("maxNrofCSI-IM-ResourceSetsPerConfig") may be 16 at maximum when the resource type is "aperiodic" and may be one otherwise.

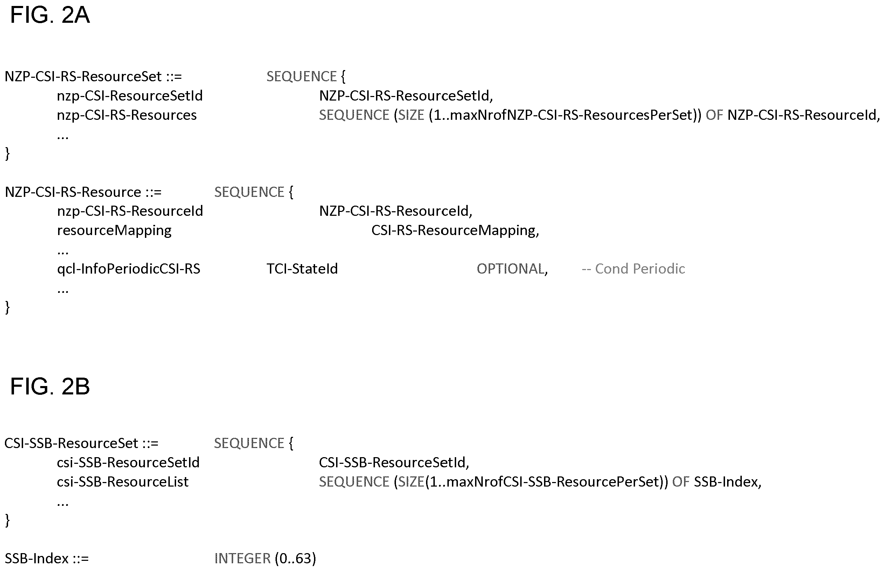

FIGS. 2A and 2B are diagrams to show examples of RRC information elements related to an NZP CSI-RS resource set and a CSI-SSB resource set.

As shown in FIG. 2A, the NZP CSI-RS resource set information ("NZP-CSI-RS-ResourceSet") includes an NZP CSI-RS resource set ID and one or more NZP CSI-RS resource IDs ("NZP-CSI-RS-ResourceId").

The NZP CSI-RS resource information ("NZP-CSI-RS-Resource") may include an NZP CSI-RS resource ID and an ID of a transmission configuration indication state (TCI state) ("TCI-stateId"). The TCI state will be described later.

As shown in FIG. 2B, the CSI-SSB resource set information ("CSI-SSB-ResourceSet") includes a CSI-SSB resource set ID and one or more pieces of SSB index information ("SSB-Index"). The SSB index information may be an integer equal to or larger than zero and equal to or smaller than 63, for example, and may be used to identify an SSB in an SS burst.

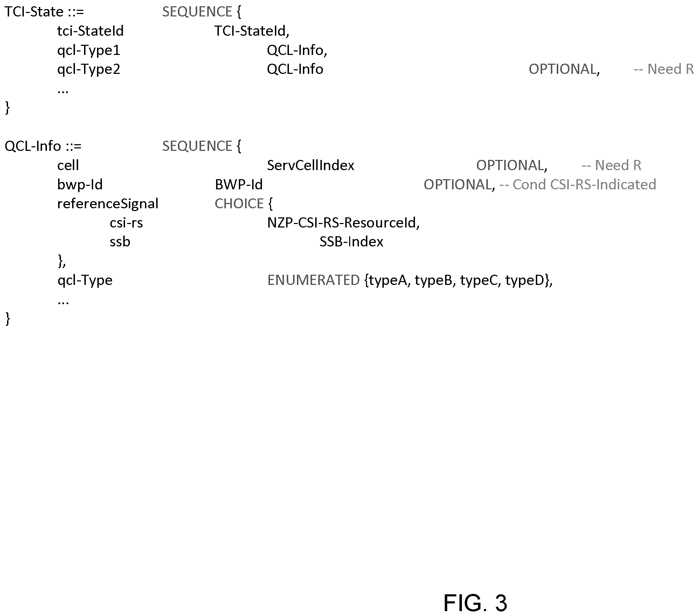

FIG. 3 is a diagram to show an example of an RRC information element related to a TCI state.

The TCI state is information related to quasi-co-location (QCL) of a channel state or a signal, and may be referred to as a spatial reception parameter, spatial relation information (spatial relation info), and the like. The TCI state may be configured or indicated for the UE for each channel or for each signal.

As shown in FIG. 3, the TCI state information ("TCI-State") may include a TCI state ID and one or more pieces of QCL information ("QCL-Info"). The QCL information may include at least one of information related to a reference signal of a QCL source (RS related information ("referenceSignal")) and information indicating a QCL type (QCL type information "qcl-Type"). The RS related information may include information such as the index of an RS (for example, an NZP CSI-RS resource ID, an SSB index), the index of a serving cell, or an index of a BWP (Bandwidth Part) in which the RS is located.

A UE may control, for at least one of a signal and a channel (expressed as a signal/channel), reception processing (for example, at least one of reception, demapping, demodulation, decoding, receive beam determination, and the like), transmission processing (for example, at least one of transmission, mapping, modulation, coding, transmit beam determination, and the like), and the like, based on the TCI state corresponding to the TCI state ID associated with the signal/channel.

As shown in FIG. 2A, for a P-CSI-RS, a related TCI state may be configured by RRC. Note that, for a P-CSI-RS, an SP-CSI-RS, and an A-CSI-RS, a related TCI state may be determined based on higher layer signaling or physical layer signaling, or a combination of these.

### (Beam Management)

For Rel-15 NR, a beam management (BM) method has been studied. In the beam management, beam selection is performed based on L1-RSRPs reported by a UE. Changing (switching) a beam of a certain signal/channel may correspond to changing at least one of the TCI state and the QCL assumption for the signal/channel.

The UE may use an uplink control channel (Physical Uplink Control Channel (PUCCH)) or an uplink shared channel (Physical Uplink Shared Channel (PUSCH)) to report (transmit) a measurement result for beam management. The measurement result may be CSI including at least one of an L1-RSRP, an L1-RSRQ, an L1-SINR, an L1-SNR, and the like, for example.

The measurement result (for example, CSI) reported for beam management may be referred to as beam measurement, a beam measurement report, a beam report (CSI report), CSI-report CSI, and the like.

CSI measurement for a CSI report may include interference measurement. The UE may use a resource for CSI measurement to measure channel quality, interference, and the like, and derive a CSI report.

The CSI report may include a result of at least one of channel quality measurement and interference measurement. The result of the channel quality measurement may include an L1-RSRP, for example. The result of the interference measurement may include an L1-SINR, an L1-SNR, an L1-RSRQ, or any other indicator related to interference (for example, any indicator that is not an L1-RSRP).

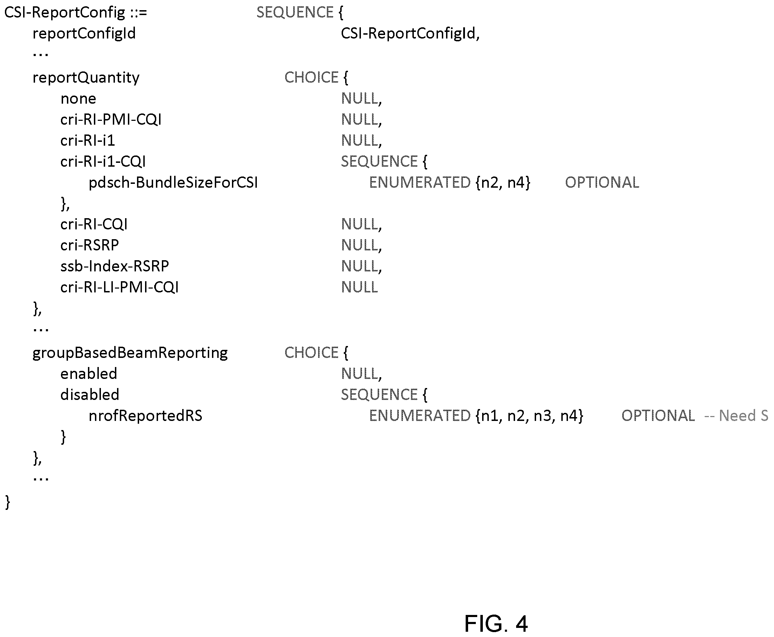

CSI report configuration information taking account of beam management in current NR will be described with reference to FIG. 4. FIG. 4 is an extract of an RRC information element "CSI-ReportConfig." FIG. 4 shows a different part of the same CSI report configuration information (CSI-ReportConfig) as that in FIG. 1A.

The CSI report configuration information may include "report quantity" (which may be represented by an RRC parameter "reportQuantity"), which is information of a parameter to be reported in one report instance (for example, one piece of CSI). The report quantity is defined by "choice," which is a type of ASN.1 object. Hence, one of parameters (such as cri-RSRP and ssb-Index-RSRP) defined as report quantities is configured.

A UE configured with a higher layer parameter included in the CSI report configuration information (for example, an RRC parameter "groupBasedBeamReporting" related to group based beam reporting) being disabled may include, for each report setting, different resource IDs for beam measurement (for example, SSBRIs, CRIs), the number of resource IDs corresponding to the number of a higher layer parameter (for example, an RRC parameter "nrofReportedRS" indicating the number of reported RSs) included in the CSI report configuration information and measurement results (for example, L1-RSRPs) corresponding to the respective IDs, in a CSI report (one report instance).

A UE configured with groupBasedBeamReporting being enabled may include, for each report setting, two different resource IDs for beam measurement and two measurement results (for example, L1-RSRPs) corresponding to the respective IDs, in a CSI report. In other words, the UE configured with groupBasedBeamReporting being enabled divides DL-RSs (for example, CSI-RSs) into two groups and reports an ID and a measurement value for the highest RS in each of the groups. Note that the two resources for beam measurement (CSI-RS resources, SSB resources) may be received simultaneously by using one spatial domain reception filter or may be received simultaneously by using a plurality of simultaneous spatial domain reception filters, by the UE.

The NZP CSI-RS resource set information shown in FIG. 2A may include information related to repetition in the resources in the resource set. The information related to repetition may indicate 'on' or 'off,' for example. Note that 'on' may be represented as 'enabled or valid,' and 'off' may be represented as 'disabled or invalid.'

For example, for a resource set configured with repetition being 'on,' the UE may assume that resources in the resource set are transmitted by using the same downlink spatial domain transmission filter. In this case, the UE may assume that the resources in the resource set are transmitted by using the same beam (for example, from the same base station by using the same beam).

For a resource set configured with repetition being 'off,' control may be performed so that the UE must not assume (or need not assume) that the resources in the resource set are transmitted by using the same downlink spatial domain transmission filter. In this case, the UE may assume that the resources in the resource set are not transmitted by using the same beam (for example, are transmitted by using different beams). In other words, the UE may assume that a base station performs beam sweeping for the resource set configured with repetition being 'off.'

In Rel-15 NR, cri-RSRP and ssb-Index-RSRP among report quantities are related to beam management. A UE configured with cri-RSRP as a report quantity reports a CRI and an L1-RSRP corresponding to the CRI. A UE configured with ssb-Index-RSRP as a report quantity reports an SSBRI and an L1-RSRP corresponding to the SSBRI.

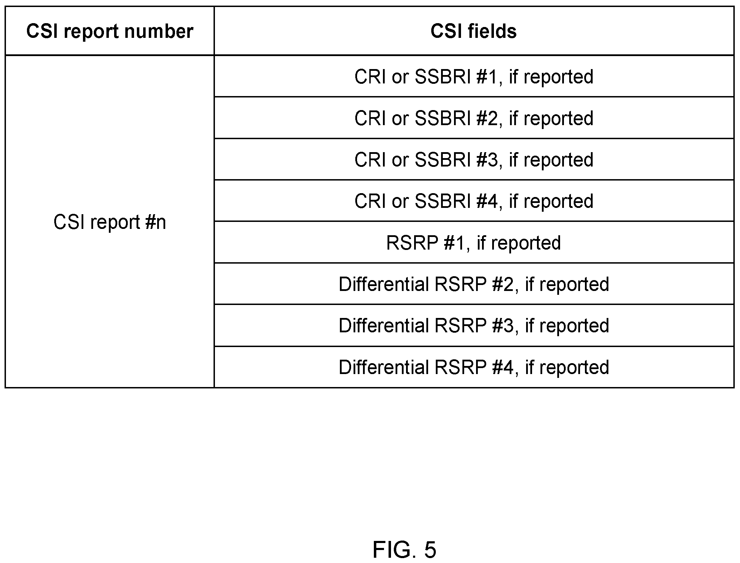

FIG. 5 is a diagram to show an example of a CSI report in Rel-15 NR. FIG. 5 shows a mapping order of CSI fields included in one CSI report (n-th CSI report #n) for CSI/RSRP or SSBRI/RSRP reporting defined in Rel. 15.

The CSI report in FIG. 5 can include one or more pairs of a CRI/SSBRI and an RSRP. The number of these pairs may be configured by a higher layer parameter (for example, an RRC parameter (nrofReportedRS)) indicating the number of report-target reference signal resources.

When nrofReportedRS is configured at one ('n1' as a value) for L1-RSRP reporting, RSRP #1, which is a field of a certain number of bits (for example, m bits) indicating the L1-RSRP being the largest measurement value is included in the CSI report. In Rel-15 NR, m is seven (m = 7).

For L1-RSRP reporting, when nrofReportedRS is configured to be larger than one or when groupBasedBeamReporting is configured to be enabled, the UE uses differential L1-RSRP based reporting. Concretely, the UE includes, in the same CSI report (reporting instance), RSRP #1 indicating the L1-RSRP being the largest measurement value and differential RSRP #k computed (calculated) with reference to the largest measurement value for the k-th (in FIG. 5, k = 2, 3, 4) largest L1-RSRP (for example, as a difference from the measurement value). Here, differential RSRP #k may be a field having the number of bits (for example, n bits) smaller than the certain number. In Rel-15 NR, n is four (n = 4).

For example, for each group, seven bits of an absolute RSRP value corresponding to the first beam (range from -140 to -44 dBm using 1-dB step size) and four bits of a differential RSRP value corresponding to the second beam are reported.

Note that, when groupBasedBeamReporting is configured to be enabled, the UE includes RSRP #1 and differential RSRP #2 in the same CSI report.

CRI/SSBRI #k in FIG. 5 is a field indicating a CRI/SSBRI corresponding to RSRP #k or differential RSRP #k (included when RSRP #k or differential RSRP #k is reported).

Note that, in NR of Rel. 16 or later versions, nrofReportedRS may be a value equal to or larger than four and may be four or larger. Four or more pairs of a CRI/SSBRI and an RSRP may be included in a CSI report. m and n above, for example, are not limited to seven and four, respectively.

In NR of Rel. 16 or later versions, L1-SINR reporting may be performed. To the L1-SINR reporting, a content obtained by interpreting an RSRP in L1-RSRP reporting described above as an SINR may be applied. Note that, in this case, a configuration/parameter for SINR may be different from a configuration/parameter for RSRP, and, for example, nrofReportedRS above may be interpreted as nrofReportedRSForSINR indicating the number of reference signal resources targeted for reporting of an SINR.

For computation of L1-RSRPs, a UE may be configured with CSI-RS resource setting of 16 CSI-RS resource sets at maximum each including 64 resources at maximum. The total number of CSI-RS resources different over all the resource sets may be 128 or less.

For computation of L1-SINRs, the UE may be configured with CSI-RS resource setting of 16 CSI-RS resource sets at maximum including 64 CSI-RS resources at maximum or 64 SS/PBCH blocks at maximum in total, in channel measurement.

When one resource setting linked to CSI-ReportConfig includes a plurality of aperiodic resource sets for a UE configured with information of CSI aperiodic trigger state list (higher layer parameter "CSI-AperiodicTriggerStateList"), only one of the aperiodic CSI-RS resources of the resource setting may be associated with a trigger state. In this case, the UE may be configured to select one CSI-IM/NZP CSI-RS resource set from the resource setting for each resource setting by a higher layer for each trigger state.

The UE need not assume (expect) that at least one of NZP CSI-RS resources and SS/PBCH block resources exceeding 64, in a resource setting for channel measurement of CSI-ReportConfig configured with a report quantity (higher layer parameter reportQuantity) being configured at "none," "cri-RI-CQI," "cri-RSRP," "ssb-Index-RSRP," "cri-SINR," or "ssb-Index-SINR."

When the UE is configured with CSI-ReportConfig having a report quantity (higher layer parameter reportQuantity) being configured at "cri-RSRP," "cri-SINR," or "none," and the CSI-ReportConfig is linked to a resource setting with a higher layer parameter resourceType being configured at "aperiodic," the UE need not assume that CSI-RS resources exceeding 16 are configured for the CSI-RS resource set included in the resource setting.

When the UE is configured with CSI-ReportConfig having a report quantity (higher layer parameter reportQuantity) being configured at "cri-RSRP," "cri-RI-PMI-CQI," "cri-RI-i1," "cri-RI-i1-CQI," "cri-RI-CQI," "cri-RI-LI-PMI-CQI," or "cri-SINR," and two or more resources for channel measurement are configured for a corresponding resource set, the UE may derive a CSI parameter other than a CRI with a reported CRI as a condition. Here, CRI k (k ≥ 0) may correspond to a (k + 1)-th entry configured with related nzp-CSI-RS-Resources in corresponding NZP-CSI-RS-ResourceSet for channel measurement, a (k + 1)-th entry of related csi-IM-Resource of csi-IM-ResourceSet, or a (k + 1)-th entry of related nzp-CSI-RS-Resources of corresponding NZP-CSI-RS-ResourceSet for interference measurement (when reportQuantity is configured at "cri-SINR" in CSI-ReportConfig). When two CSI-RS resources are configured, each resource may include 16 CSI-RS ports at maximum. When three or more and eight or less CSI-RS resources are configured, each resource may include eight CSI-RS ports at maximum.

When the UE is configured with CSI-ReportConfig with a report quantity (higher layer parameter reportQuantity) being configured at "ssb-Index-RSRP," the UE may report SSBRIs. Here, SSBRI k (k ≥ 0) may correspond to a (k + 1)-th entry configured in related csi-SSB-ResourceList in corresponding CSI-SSB-ResourceSet.

When the UE is configured with CSI-ReportConfig with a report quantity (higher layer parameter reportQuantity) being configured at "ssb-Index-SINR," the UE may derive L1-SINRs with reported SSBRIs as a condition. Here, SSBRI k (k ≥ 0) may correspond to a (k + 1)-th entry configured with related csi-SSB-ResourceList in a corresponding CSI-SSB-ResourceSet for channel measurement, a (k + 1)-th entry of a related csi-IM-Resource of csi-IM-ResourceSet, or a (k + 1)-th entry of related nzp-CSI-RS-Resources of corresponding NZP-CSI-RS-ResourceSet for interference measurement.

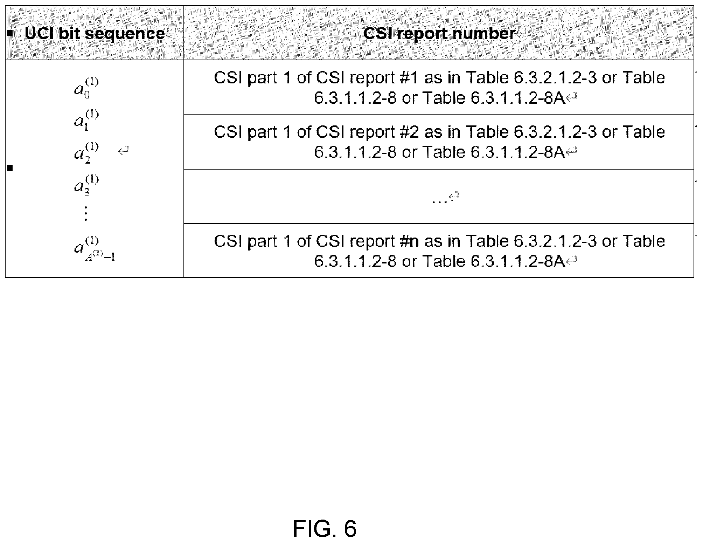

A CSI report number is assigned to each CSI report associated with a CSI report configuration ID (for example, reportConfigID) (refer to FIG. 6).

The order of CSI reports may be determined in ascending order of priority levels of CSI. A smaller value indicating a priority level indicates a higher priority.

Priority parameters each with the priority level being high (in other words, parameters each giving a relatively significant influence on a priority level) are periodicity of a CSI report and presence/absence of an L1-RSRP/SINR. For example, a parameter to be used for computation of a value indicating the priority level (priority value) and related to periodicity of a CSI report indicates 3 when the CSI reporting is periodic CSI, indicates 2 when the CSI report is semi-persistent CSI reported in a PUCCH, indicates 1 when the CSI report is semi-persistent CSI reported in a PUSCH, and indicates 0 when the CSI report is aperiodic CSI. A parameter related to presence/absence of an L1-RSRP/SINR used for computation of the above value indicates 0 when the CSI report is CSI including an L1-RSRP/SINR and indicates 1 when the CSI report is CSI including no L1-RSRP/SINR.

For example, when a plurality of pieces of CSI having different priority values other than periodic CSI and semi-persistent CSI in a PUCCH collide/overlap, the UE transmits only one of the pieces of CSI, based on the priorities.

For example, when semi-persistent CSI in a PUSCH and a PUSCH including data collide/overlap, the UE does not perform CSI reporting (other than aperiodic CSI).

The priority level indicating a middle-level priority is a cell ID (index). The priority level indicating a low-level priority is a report configuration ID in CSI.

As described above, a differential RSRP/SINR defined in Rel. 15/16 or previous versions is quantized to four bits.

In Rel. 15/16, the value of a differential L1-RSRP is calculated using 2-dB step size with the largest measured L1-RSRP as a reference. In Rel. 15/16, the value of a differential L1-SINR is calculated using 1-dB step size with the largest measured L1-SINR as a reference.

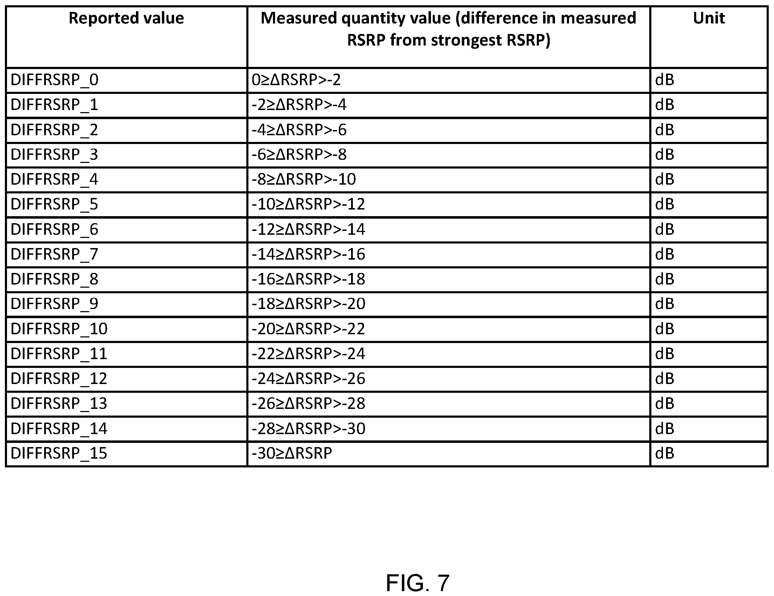

FIG. 7 is a diagram to show associations related to differential RSRPs in Rel. 15/16. A UE computes each ΔRSRP (negative value), which is a differential RSRP, with the largest RSRP as a reference and includes a corresponding reported value in a CSI report for transmission. In the associations used for this reporting, derivation is made by using 2-dB step size for a differential RSRP.

### (CSI Reference Resource)

In an existing NR standard, it is defined to control derivation of channel measurement for computation of CSI, based on a CSI reference resource, for an uplink slot for performing CSI reporting. The time resource of the CSI reference resource may correspond to a specific downlink slot with downlink slot n corresponding to uplink slot n' for performing the CSI reporting as a reference.

For example, in an existing NR standard, it is defined that, when a higher layer parameter related to time restriction for measurement (for example, timeRestrictionForChannelMeasurements related to time restriction for channel measurement, timeRestrictionForInterferenceMeasurements for interference measurement, or the like) is configured (which may mean that the configuration value of the parameter indicated "configured"), channel measurement for computation of CSI to report is derived based on the most recent NZP CSI-RS occasion related to a CSI report configuration and being not later than a CSI reference resource. Note that channel measurement in the present disclosure may be interpreted as interference measurement, and vice versa.

In an existing NR standard, it is defined that, when the above higher layer parameter related to time restriction for measurement is not configured (which may mean that the configuration value of the parameter indicates "notConfigured"), channel measurement for computation of CSI to report is derived based on an NZP CSI-RS occasion related to a CSI report configuration and being not later than the CSI reference resource.

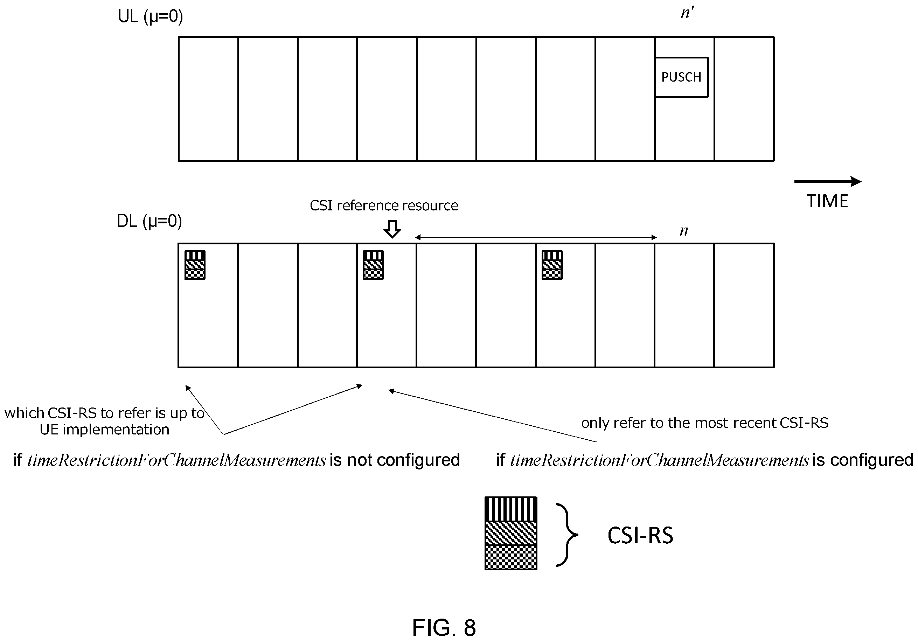

FIG. 8 is a diagram to show examples of determination of a CSI-RS for computation of CSI based on a CSI reference resource in an existing NR standard. Note that, for simplicity, description will be given by assuming a subcarrier spacing (SubCarrier Spacing (SCS)) configuration µ = 0 in DL and UL, but it is to be naturally understood by those skilled in the art that this is not restrictive. In the present example, when the above parameter related to time restriction for measurement is configured, CSI is determined based only on the most recent NZP CSI-RS occasion not later than a CSI reference resource. However, when the parameter is not configured, which one of NZP CSI-RSs not later than the CSI reference resource is to be used to determine CSI is up to UE implementation.

### (Application of Artificial Intelligence (AI) Technology to Radio Communication)

For future radio communication technologies, it is studied to utilize AI technologies, such as machine learning (ML), for network/device control, management, and the like.

For example, for future radio communication technologies, it is studied to utilize AI technologies for improvement of channel state information (Channel State Information Reference Signal (CSI)) feedback, for example, overhead reduction, accuracy improvement, prediction, and the like. CSI feedback based on an AI technology may be referred to as AI-aided CSI feedback.

Channel measurement/estimation may be performed by using at least one of a channel state information reference signal (CSI-RS), a synchronization signal (SS), a synchronization signal/broadcast channel (Synchronization Signal/Physical Broadcast Channel (SS/PBCH)) block, a demodulation reference signal (DMRS), a reference signal for measurement (Sounding Reference Signal (SRS), and the like, for example.

Note that (a metric of) existing CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

For beam prediction using AI/ML, it is considered that data of historical (past) beam measurement is useful.

By historical beam management with the prediction, improvement of prediction accuracy can be expected.

In contrast, in an existing specification, CSI related to one time instance is reported in one CSI report.

There is a problem that, although CSI reports of different time points can be included in one piece of UCI when a plurality of CSI reports are configured for the same occasion, appropriate design is not made for a CSI report including pieces of CSI of a plurality of time points calculated based on different CSI resources for measurement results (for example, L1-RSRPs/SINRs).

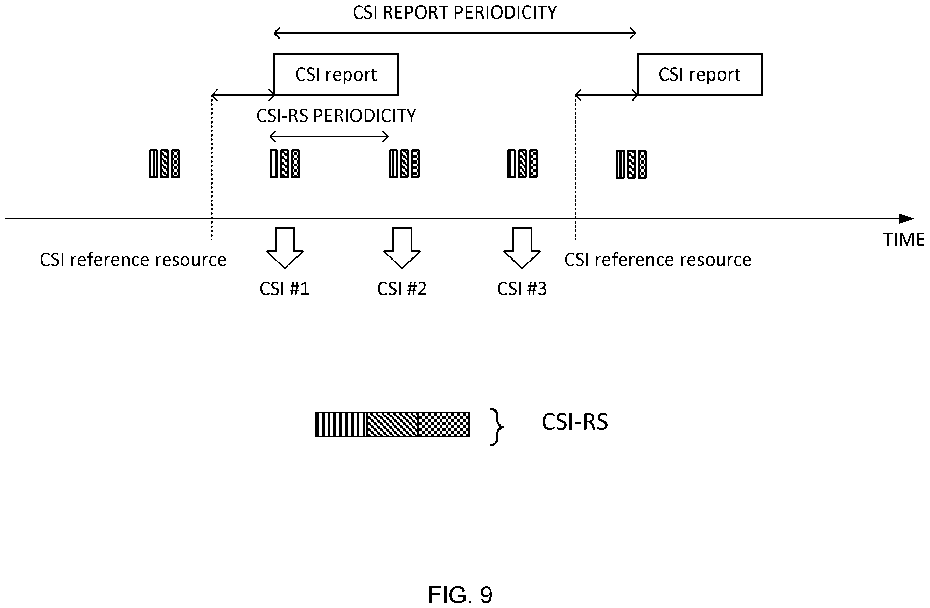

FIG. 9 is a diagram to show an example of CSI reporting for a plurality of time instances. In FIG. 9, a UE receives a plurality of CSI-RSs in a period from first timing (for example, timing based on a certain CSI reference resource) to second timing (for example, timing based on the next CSI reference resource).

The UE derives pieces of CSI (in the example in FIG. 9, CSI #1 to CSI #3) corresponding to respective CSI-RS reception occasions (time instances). It is studied that the UE includes these CSI #1 to CSI #3 in one CSI report for transmission.

By including pieces of CSI corresponding to a plurality of respective time instances for reporting in one piece of CSI as described above, the overhead of a CSI report including common CRI/SSBRI and RSRPs/SINRs/differential RSRPs/differential SINRs can be expected to be reduced.

However, sufficient study about a method and a configuration of such CSI reporting has not been performed. Concretely, sufficient study about a relationship between a plurality of time instances and a CSI report, bit widths of a CRI, an SSBRI, an RSRP/differential SINR included in a CSI report, a method of differentiating a CRI and an SSBRI, and the like has not been performed. Unless these are sufficiently studied, appropriate overhead reduction/highly accurate channel estimation/highly efficient use of resources cannot be achieved, which may suppress improvement of communication throughput/communication quality.

Hence, the inventors of the present invention came up with a control method appropriate for AI-aided CSI feedback. Note that each of the embodiments of the present disclosure may be applied to a case where AI/prediction is not used.

In one embodiment of the present disclosure, a terminal (user terminal, User Equipment (UE))/base station (BS) performs training of an ML model in a training mode and carries out the ML model in a test mode (also referred to as a testing mode and the like). In the test mode, validation of the accuracy of the ML model trained in the training mode (trained ML mode) may be performed.

In the present disclosure, the UE/BS may input channel state information, a reference signal measurement value, and the like to the ML model and output highly accurate channel state information/measurement value/beam selection/position, future channel state information/radio link quality, and the like.

Note that, in the present disclosure, AI may be interpreted as an object (also referred to as a target, an object, data, a function, a program, and the like) that has (implements) at least one of the following features:
- estimation based on observed or collected information,
- selection based on observed or collected information, and
- prediction based on observed or collected information.

In the present disclosure, the object may be an apparatus such as a terminal or a base station, a device, or the like, for example. The object body may correspond to a program included in the apparatus.

In the present disclosure, an ML model may be interpreted as an object that has (implements) at least one of the following features:
- by feeding information, generating an estimation value,
- by feeding information, predicting an estimation value,
- by feeding information, discovering characteristics, and
- by feeding information, selecting an operation.

In the present disclosure, an ML modem may be interpreted as at least one of a model, an AI mode, predictive analytics, a predictive analytics model, and the like. An ML model may be derived by using at least one of regression analysis (for example, linear regression analysis, multiple regression analysis, logistic regression analysis), support vector machine, random forest, neural network, deep learning, and the like. In the present disclosure, a model may be interpreted as at least one of an encoder, a decoder, a tool, and the like.

An ML model outputs, based on input information, information of at least one of an estimation value, a prediction value, a selected operation, a category, and the like.

Examples of the ML model may include supervised learning, unsupervised learning, reinforcement learning, and the like. Supervised learning may be used to learn general rules for mapping input to output. Unsupervised learning may be used to learn characteristics of data. Reinforcement learning may be used to learn an operation for maximizing a purpose (goal).

The embodiments to be described below will be described by assuming a case where supervised learning is used for an ML model, but this is not restrictive.

In the present disclosure, "carrying out," "operation," "execution," and the like may be interchangeably interpreted. In the present disclosure, a test, after-training, production use, actual use, and the like may be interchangeably interpreted. A signal may be interpreted as a signal/channel, and vice versa.

In the present disclosure, the training mode may correspond to a mode in which the UE/BS transmits/receives a signal for an ML model (in other words, an operation mode in a training period). In the present disclosure, the test mode may correspond to a mode in which the UE/BS carries out an ML model (for example, carries out a trained ML model to predict an output) (in other words, an operation mode in a test period).

In the present disclosure, the training mode may mean a mode in which, for a specific signal transmitted in the test mode, the specific signal having a large overhead (for example, a large amount of resource) is transmitted.

In the present disclosure, the training mode may mean a mode in which a first configuration (for example, a first DMRS configuration, a first CSI-RS configuration) is referred to. In the present disclosure, the test mode may mean a mode in which a second configuration (for example, a second DMRS configuration, a second CSI-RS configuration) different from the first configuration is referred to. For the first configuration, at least one of time resources, frequency resources, code resources, and ports (antenna ports) related to measurement may be configured more than those for the second configuration.

Embodiments according to the present disclosure will be described in detail with reference to the drawings as follows. The radio communication methods according to respective embodiments may each be employed individually, or may be employed in combination.

In the following embodiments, since an ML model related to UE-BS communication will be described, related subjects are a UE and a BS. However, application of each of the embodiments of the present disclosure is not limited to this. For example, for communication between other subjects (for example, UE-UE communication), a UE and a BS in the embodiments below may be interpreted as a first UE and a second UE. In other words, any of a UE, a BS, and the like in the present disclosure may be interpreted as any UE/BS.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, a CSI-RS, a non-zero power (NZP) CSI-RS, a zero power (ZP) CSI-RS, and CSI interference measurement (CSI-IM) may be interchangeably interpreted. Examples of a CSI-RS may include other reference signals.

In the present disclosure, an RS to be measured/reported may mean an RS to be measured/reported for a CSI report.

In the present disclosure, timing, a time point, a time, a time instance, a slot, a sub-slot, a symbol, a subframe, and the like may be interchangeably interpreted.

In the present disclosure, a CSI-RS occasion, a CSI-RS resource occasion, an occasion, and a time instance may be interchangeably interpreted.

In the present disclosure, an RS may be a CSI-RS, an SS/PBCH block (SS block (SSB)), and the like, for example. An RS index may be a CSI-RS resource indicator (CRI), an SS/PBCH block resource indicator (SSBRI), or the like.

In the present disclosure, estimation, prediction, and inference may be interchangeably interpreted. In the present disclosure, "estimate," "predict," and "infer" may be interchangeably interpreted.

In the present disclosure, UCI, a CSI report, CSI part 1, a CSI part 2, CSI feedback, feedback information, feedback bits, and the like may be interchangeably interpreted. In the present disclosure, a bit, a bit string, a bit sequence, a sequence, a value, information, a value obtained from a bit, information obtained from a bit may be interchangeably interpreted.

Each embodiment/aspect/option/choice/variation in the present disclosure may be used based on at least one of the following conditions:
- configuration of a (explicitly) corresponding higher layer parameter,
- configuration of a (implicitly) related higher layer parameter,
- indication of (a field included in) a MAC CE/DCI,
- (reported) UE capability,
- definition in a specification,
- specific condition defined in a specification, and
- configuration/indication by at least one of a higher layer parameter, a MAC CE, DCI, and (reported) UE capability.

Each embodiment/aspect/option/choice/variation in the present disclosure may be used individually or may be used in combination.

In each of the embodiments of the present disclosure, description will be given by mainly taking an L1-RSRP/SINR as a reported result of CSI. However, a metric of a report result is not limited to this and may be interpreted as any metric.

In a structure of a CSI report in each of the embodiments of the present disclosure, each field (for example, a CRI/SSBRI/RSRP/SINR/differential RSRP/differential SINR field) may be present if reported.

In the present disclosure, a field included in a CSI report, a CSI field, an instance included in a CSI report, a CSI instance, a CSI report bit field, bit information, and the like may be interchangeably interpreted. Note that an L1-RSRP/SINR (RSRP/SINR) in the following embodiments may be interpreted as an L1-RSRP/SINR field, an index indicating an L1-RSRP/SINR, and the like, and vice versa.

In the present disclosure, a reference signal indicator for CSI measurement, a resource indicator for CSI measurement, a CRI, and an SSBRI may be interchangeably interpreted.

### (Radio Communication Method)

A UE may receive a configuration/indication related to a reference signal for CSI measurement. The UE may be notified of the configuration/indication by using higher layer signaling (RRC/MAC CE)/DCI.

The UE may receive a reference signal for CSI measurement. The reference signal for CSI measurement may be a CSI-RS, an SSB, or an SS/PBCH, for example.

Note that, in each of the following embodiments of the present disclosure, description will be given by taking a CSI-RS or an SS/PBCH as an example of the reference signal for CSI measurement, but this is not restrictive.

### <Zeroth Embodiment>

A zeroth embodiment relates to reporting of pieces of CSI at a plurality of time instances.

A UE may report report results of CSI (for example, L1-RSRPs/SINRs) at a plurality of time instances, in one piece of UCI.

In each of the following embodiments of the present disclosure, a "time instance" may mean one or a plurality of occasions of a CSI-RS (NZP CSI-RS/ZP CSI-RS/CSI-IM) not later (in terms of time) than a CSI reference resource used for derivation/calculation of CSI.

When a plurality of resource settings are configured for one report configuration (report configration), one time instance may correspond to a plurality of occasions (for example, a set of occasions). Regarding the occasions, a set of occasions constituted of one occasion of a CSI-RS (NZP CSI-RS/ZP CSI-RS/CSI-IM) per resource setting may correspond to one time instance.

The UE may report (for example, X) (X is a positive integer) L1-RSRPs/SINRs corresponding to the CSI-RSs of the X most recent time instances (occasions) not later than the CSI reference resource. The CSI-RS may correspond to one CSI resource setting.

### <<Choice 0-1>>

The UE may calculate/report a plurality of values of CSI, based on the X most recent CSI-RS occasions not later than the CSI reference resource. Each of the values of CSI may correspond to one CSI-RS occasion.

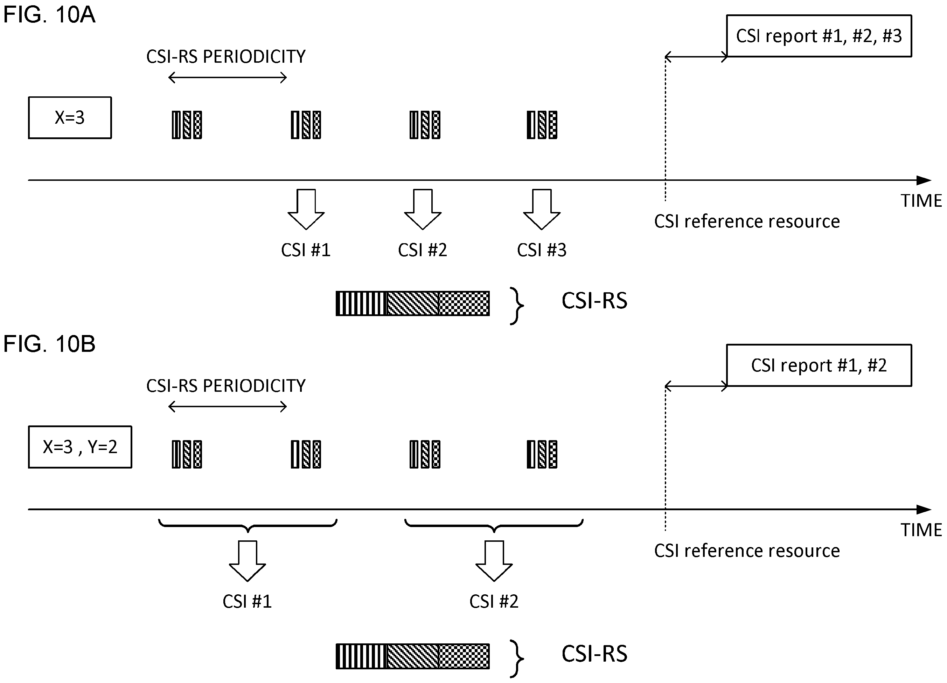

FIG. 10A is a diagram to show an example of derivation of pieces of CSI according to choice 0-1. In FIG. 10A, the UE derives/calculates three (X = 3) pieces of CSI at the three respective most recent time instances not later than the CSI reference resource. The UE includes the pieces of CSI (CSI #1 to CSI #3) at the respective time instances in one CSI report for transmission.

### <<Choice 0-2>>

The UE may calculate/report a plurality of values of CSI, based on the X most recent CSI-RS occasions not later than the CSI reference resource. Each of the values of CSI may correspond to one set of Y (Y is a positive integer) CSI-RS occasions.

FIG. 10B is a diagram to show an example of derivation of pieces of CSI according to choice 0-2. In FIG. 10B, the UE derives/calculates two (X = 2) pieces of CSI at the four respective most recent CSI-RS resource occasions not later than the CSI reference resource. Here, one CSI corresponds to two (Y = 2) CSI RS occasions. The UE includes the pieces of CSI (CSI #1 and CSI #2) at the respective time instances (set of two CSI-RS occasions) in one CSI report for transmission.

X and Y above will be described below.

### <<Option 0-1>>

At least one of X and Y may be an integer larger than 0. At least one of X and Y may be determined/judged based on at least one of higher layer signaling (RRC signaling/MAC CE), DCI, and a specific rule.

If the UE is not configured with/indicated with/notified of X/Y, the UE may assume that X/Y is a specific value (for example, 1).

### <<Option 0-2>>

X (or Y) may be determined based on Y (or X).

X/Y may be determined based on the number of CSI-RS resources measured by the UE after the CSI reference resource corresponding to the last CSI measurement/reporting.

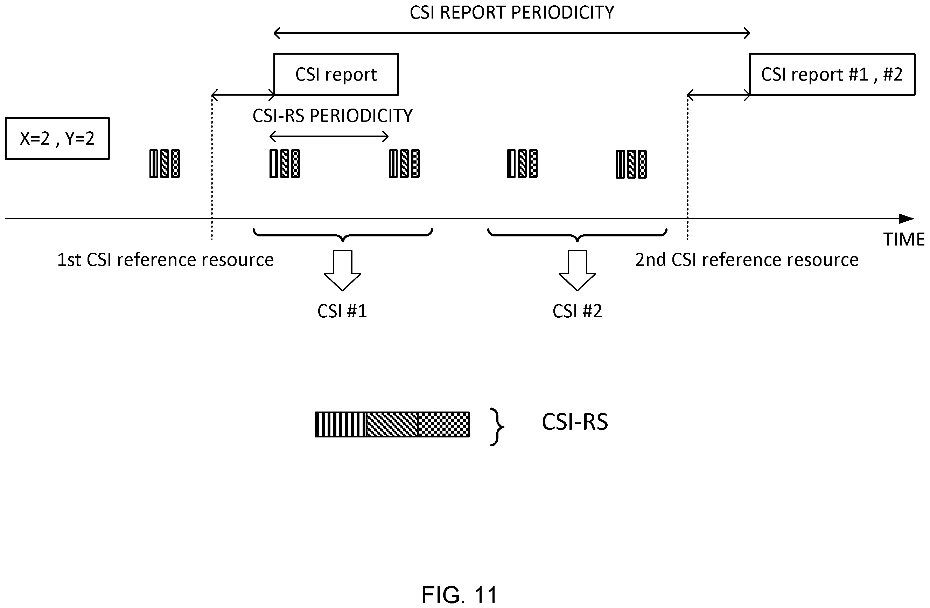

FIG. 11 is a diagram to show an example of derivation of pieces of CSI according to option 0-2. In the example shown in FIG. 11, the UE performs measurement of a specific number of (four in FIG. 11) CSI-RSs in a period after the CSI reference resource corresponding to a certain CSI measurement/reporting (first CSI report) (first CSI reference resource) and not later than the CSI reference resource corresponding to the next CSI measurement/reporting (second CSI report) (second CSI reference resource). The UE determines X/Y above for the second CSI report, based on the number. In FIG. 11, the UE determines that X = 2 and Y = 2 and derives/reports (CSI report #1 corresponding to CSI #1 and CSI report #2 corresponding to CSI #2 to be included in) the second CSI report.

According to the zeroth embodiment above, it is possible to appropriately determine CSI-RS occasions corresponding to CSI reporting for reporting of pieces of CSI at a plurality of time instances.

### <First Embodiment>

A first embodiment relates to a relationship between CSI reports in UCI and time instances.

### <<Choice 1-1>>

The UE may report a plurality of CSI reports in UCI (for example CSI part 1). One CSI report may be associated with one CSI-RS occasion (time instance).

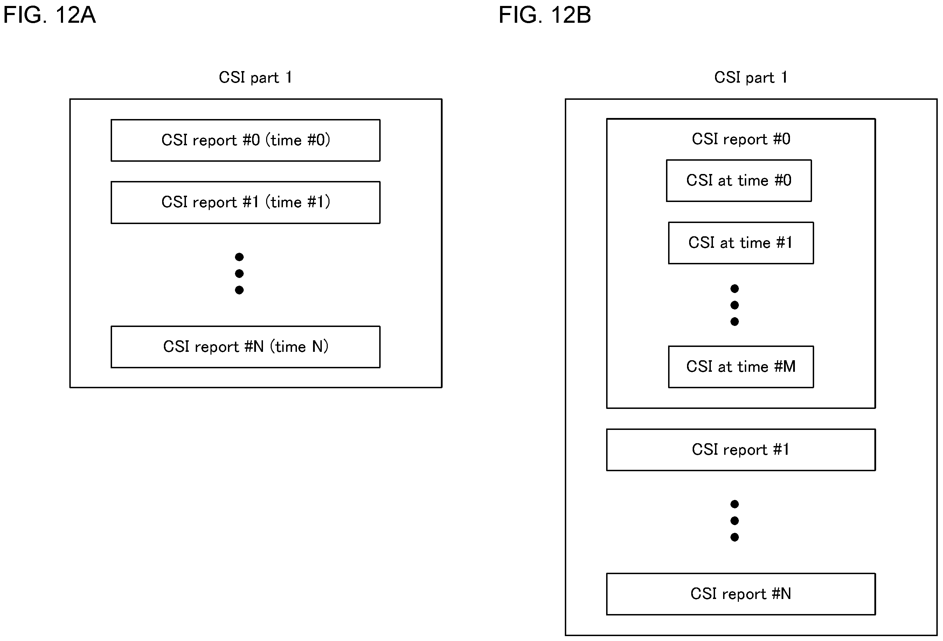

FIG. 12A is a diagram to show an example of a structure of CSI reports according to choice 1-1. In FIG. 12A, a plurality of CSI reports (CSI reports #0 to #N) are included in CSI part 1 reported by the UE. Each CSI report corresponds to one time instance (time point).

### <<Choice 1-2>>

The UE may report a plurality of CSI reports in UCI (for example CSI part 1). One CSI report may be associated with one or more (a plurality of) CSI-RS occasions (time instances).

FIG. 12B is a diagram to show an example of a structure of CSI reports according to choice 1-2. In FIG. 12B, a plurality of CSI reports (CSI reports #0 to #N) are included in CSI part 1 reported by the UE. Each CSI report corresponds to one or more (a plurality of) time instances. In the example shown in FIG. 12B, CSI report #0 includes pieces of CSI corresponding to respective time instances #0 to #M. Note that, although not shown, a plurality of pieces of CSI corresponding to a certain time instance may also be included for each of CSI reports #1 to #N.

Note that choice 1-1 and choice 1-2 above may be used in combination. For example, it may be configured that pieces of CSI corresponding to a plurality of time instances are included in one CSI report described in FIG. 12A.

According to the first embodiment above, it is possible to appropriately associate CSI reports in UCI and time instances (CSI-RS occasions).

### <Second Embodiment>

A second embodiment relates to RS indices corresponding to report results in a CSI report.

### <<Option 2-1>>

A UE may report L1-RSRPs/SINRs for different time instances in one piece of UCI (CSI report).

CRIs/SSBRIs corresponding to the respective L1-RSRPs/SINRs for the different time instances may be determined independently. It may be supported that the L1-RSRPs/SINRs for the different time instances correspond to different CRIs/SSBRIs for the different time instances.

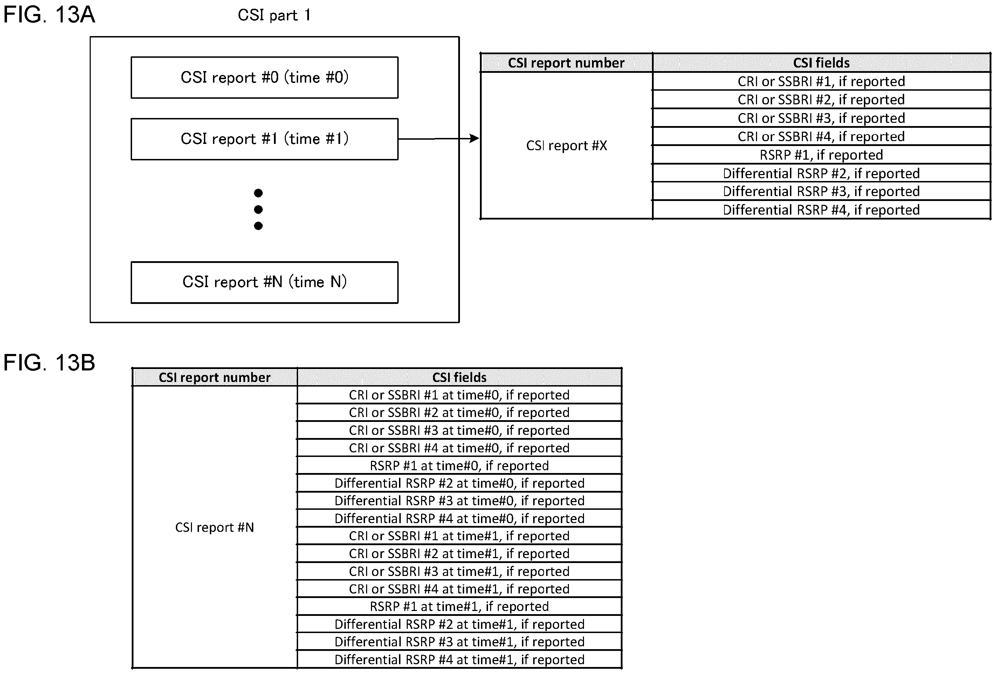

For example, when one CSI report corresponds to one time instance, and the UE transmits UCI (for example, CSI part 1) including a plurality of CSI reports, the CRIs/SSBRIs, an RSRP, and differential RSRPs may be included in each of the CSI reports (refer to FIG. 13A). Note that the structure of the CSI reports included in FIG. 13A is merely an example and is not restrictive.

Alternatively, for example, when a plurality of time instances (time points #0 and #1) correspond to one CSI report, CRIs/SSBRIs, RSRPs, and differential RSRPs corresponding to the plurality of respective time instances may be included in one CSI report (refer to FIG. 13B). Note that the structure of the CSI reports included in FIG. 13B is merely an example and is not restrictive.

According to option 2-1, it is possible to flexibly determine CRIs/SSBRIs by a UE.

### <<Option 2-2>>

A UE may report L1-RSRPs/SINRs for different time instances in one piece of UCI (CSI report).

CRIs/SSBRIs corresponding to the respective L1-RSRPs/SINRs for the different time instances may be a common (the same) CRI/SSBRI. In other words, the CRI/SSBRI corresponding to an L1-RSRP/SINR for a certain time instance and the CRI/SSBRI corresponding to an L1-RSRP/SINR for another certain time instance may be a common CRI/SSBRI.

According to option 2-2, it is possible to reduce the overhead of a CSI report by not reporting CRIs/SSBRIs for each time instance. Since historical information is needed for beam prediction, using common CRIs/SSBRIs for each time instance enables design more suitable for beam prediction.

In an existing specification, the largest L1-RSRP/SINR corresponding to one CRI/SSBRI is reported in a CSI report, and a differential RSRP/SINR with reference to the largest L1-RSRP/SINR is reported for each of other CRIs/SSBRIs.

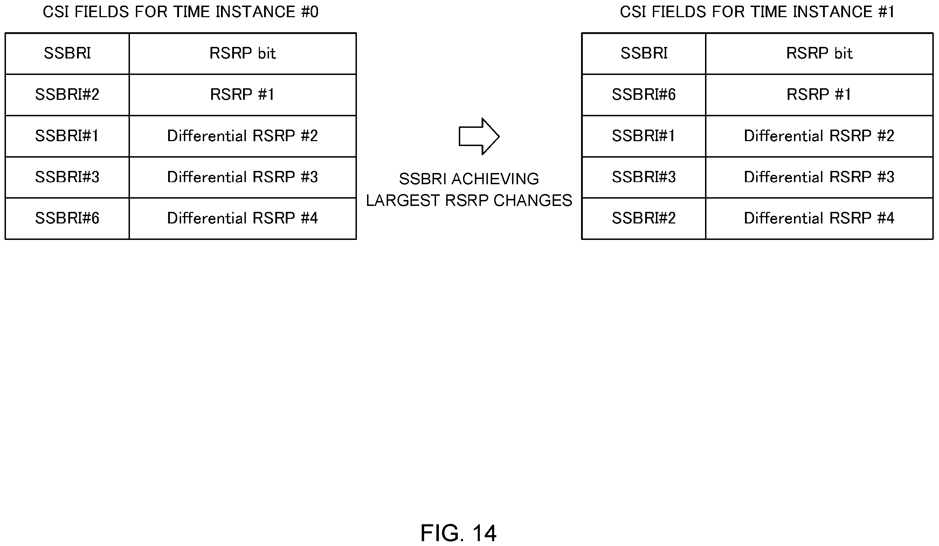

If a CRI/SSBRI that reaches the largest RSRP/SINR changes as time proceeds (for example, case as that shown in FIG. 14), a CSI report defined in an existing specification is not suitable for operation of option 2-2 above.

In aspect 2-1 below, description will be given related to a structure of a CSI instance/report suitable for option 2-2 above.

### {Aspect 2-1}

### <<Option 2-1-1>>

The UE may report a plurality of CRIs/SSBRIs for a plurality of CSI reports only in a specific CSI report. The plurality of CRIs/SSBRIs may include a CRI/SSBRI corresponding to the largest RSRP/SINR to be reported in the specific CSI report and a CRI/SSBRI corresponding to each differential RSRP/SINR to be reported.

The UE may report a CRI/SSBRI achieving the largest RSRP/SINR for each CSI report in the specific CSI report and the CSI reports other than the specific CSI report.

The specific CSI report may be a CSI report corresponding to a specific (for example, the lowest/highest) CSI report number among those having the same report configuration ID (for example, reportConfigID).

The specific CSI report may be a CSI report corresponding to a specific time instance (for example, earliest (oldest)/last (newest) in terms of time) among those having the same report configuration ID (for example, reportConfigID).

In only one CSI report among those having the same report configuration ID (for example, reportConfigID), the plurality of CRIs/SSBRIs for the plurality of CSI reports may be included.

For example, the UE may include the plurality of CRIs/SSBRIs only in the CSI report having the lowest CSI number among those having the same report configuration ID (for example, reportConfigID), for CSI reporting.

For example, the UE may include the plurality of CRIs/SSBRIs only in the CSI report corresponding to the time instance being the earliest (oldest)/last (newest) in terms of time among those having the same report configuration ID (for example, reportConfigID), for CSI reporting.

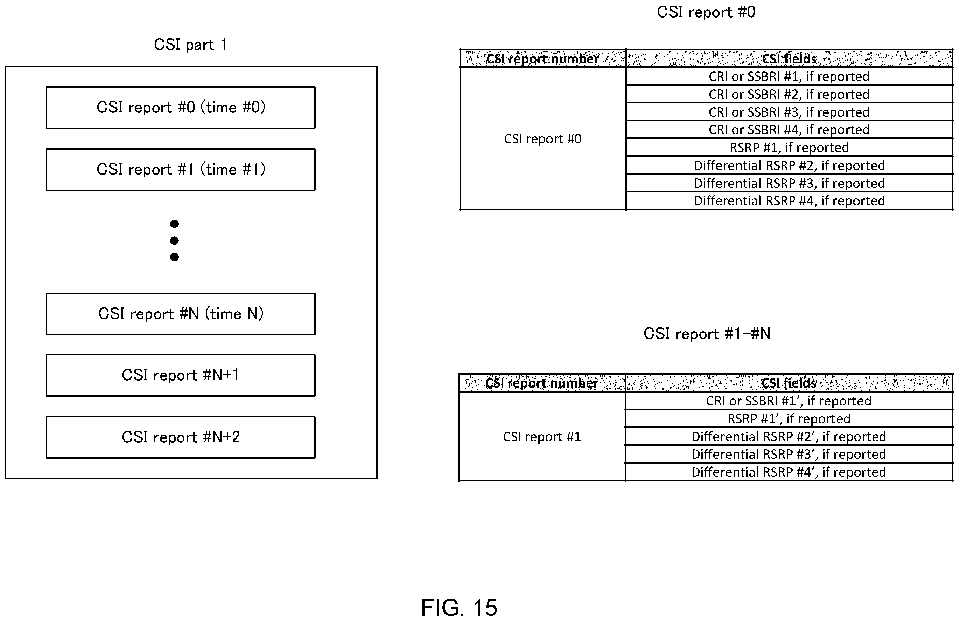

FIG. 15 is a diagram to show an example of structures of a CSI report according to option 2-1-1. In the example shown in FIG. 15, CSI reports #0 to #N corresponding to respective time instances (time points) #0 to #N are included in UCI (CSI part 1).

In the example shown in FIG. 15, CSI report #0 having the lowest CSI report number includes a plurality of CRIs/SSBRIs for the plurality of CSI reports. In each of the other CSI reports (specifically, CSI reports #1 to #N) include a CRI/SSBRI achieving the largest RSRP without including the plurality of CRIs/SSBRIs.

### <<Option 2-1-2>>

The UE may report CRIs/SSBRIs common to a plurality of time instances in one CSI report/report instance.

The UE may report a CRI/SSBRI achieving the largest RSRP/SINR corresponding to each time instance.

For example, the UE may report the CRIs/SSBRIs common to the plurality of time instances and the CRI/SSBRI achieving the largest RSRP/SINR corresponding to each of the time instances other than a specific time instance, in one CSI report.

The specific time instance may be the time instance being the earliest (oldest)/last (newest) in terms of time.

At least one of options 2-1-2-1 and 2-1-2-2 below may be applied to a structure of a CSI report for option 2-1-2.

The order of CRIs/SSBRIs (and an RSRP/SINR/differential RSRPs/differential SINRs corresponding to each of the CRIs/SSBRIs) included in one CSI report may be determined separately for each time instance (option 2-1-2-1). The order of CRIs/SSBRIs (and an RSRP/SINR/differential RSRPs/differential SINRs corresponding to each of the CRIs/SSBRIs) included in one CSI report may be different for each time instance.

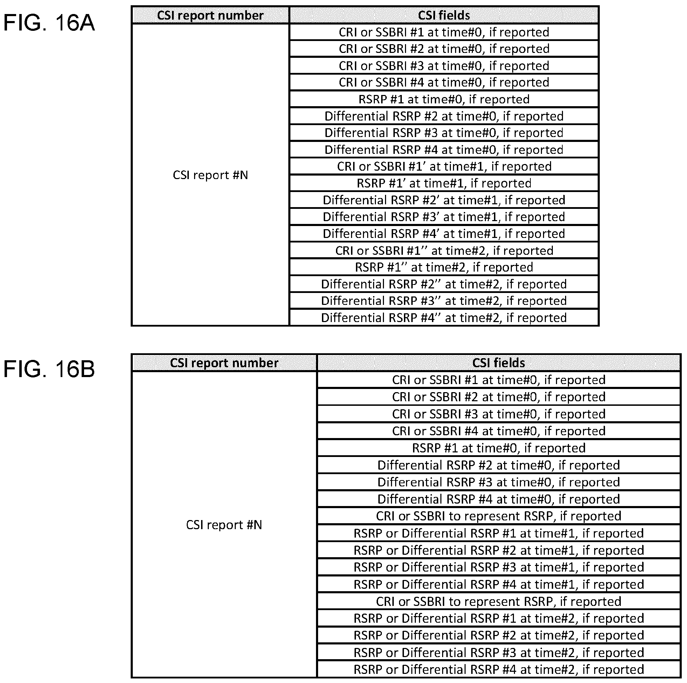

FIG. 16A is a diagram to show an example of a structure of a CSI report according to option 2-1-2-1. In the example shown in FIG. 16A, CRIs/SSBRIs and measurement results corresponding to three instances (time points #0 to #2) are included.

In the example shown in FIG. 16A, CRIs or SSBRIs (CRIs or SSBRIs #1 to #4) common to the plurality of time instances are included in a certain CSI report. The common CRIs or SSBRIs may be included in a CSI report as CRIs or SSBRIs corresponding to the time instance #0 (time point #0) or the most recent time instance. In the example shown in FIG. 16A, the largest RSRP corresponding to CRI or SSBRI #1 (RSRP #1) and differential RSRPs corresponding to respective CRIs or SSBRIs #2 to #4 (differential RSRPs #2 to #4) are included as RSRPs corresponding to time instance #0 (time point #0) in the CSI report.

Moreover, a CRI or SSBRI (specific CRI or SSBRI) corresponding to each of time instances #1 (time point #1) and #2 (time point #2) and achieving the largest RSRP is included in the CSI report. The largest RSRPs and differential RSRPs corresponding to the CRIs or SSBRIs other than the specific CRIs or SSBRIs are included in the CSI report.

In the example shown in FIG. 16A, the order of CRIs/SSBRIs corresponding to each RSRP (RSRP and differential RSRPs) may be determined separately for each time instance. The order of CRIs or SSBRIs corresponding to each RSRP (RSRP and differential RSRPs) may be different for each time instance. In other words, the order of the CRIs/SSBRIs corresponding to RSRP/differential RSRPs #1' to #4' may be the same as or different from the order of #1 to #4. The order of the CRIs/SSBRIs corresponding to RSRP/differential RSRPs #1" to #4" may be the same as or different from the order of #1 to #4.

Note that for the ordering of CRIs/SSBRIs for each time instance for option 2-1-2-1 will be described in aspect 2-2 below in detail.

The order of CRIs/SSBRIs (and an RSRP/SINR/differential RSRPs/differential SINRs corresponding to each of the CRIs/SSBRIs) included in one CSI report may be common to time instances (option 2-1-2-2) .

FIG. 16B is a diagram to show an example of a structure of a CSI report according to option 2-1-2-2. In the example shown in FIG. 16B, CRIs/SSBRIs and measurement results corresponding to three instances (time points #0 to #2) are included.

In the example shown in FIG. 16B, CRIs or SSBRIs (CRIs or SSBRIs #1 to #4) common to the plurality of time instances are included in a certain CSI report. The common CRIs or SSBRIs may be included in the CSI report as CRIs or SSBRIs corresponding to the time instance #0 (time point #0). In the example shown in FIG. 16B, the largest RSRP corresponding to CRI or SSBRI #1 (RSRP #1) and differential RSRPs corresponding to respective CRIs or SSBRIs #2 to #4 (differential RSRPs #2 to #4) are included as RSRPs corresponding to time instance #0 (time point #0) in the CSI report.

Moreover, time instances #1 (time point #1) and #2 (time point #2) and (largest) RSRPs and differential RSRPs are included in the CSI report. In this case, the order of the fields of the RSRP/differential RSRPs of each of the time instances #1 and #2 are common to the order of the RSRP/differential RSRPs of time instance #0.

Hence, for the RSRP/differential RSRPs of each of the time instances #1 and #2, the first RSRP field does not necessarily indicate the largest RSRP. Hence, when a field indicating an RSRP or a differential RSRP corresponds to the CRI or SSBRI achieving the largest RSRP, the field has a bit width (for example, 7 bits) for a field indicating the largest RSRP, and the field has a bit width for a field indicating a differential RSRP otherwise.

Note that, when a CRI/SSBRI achieving the largest RSRP/SINR is reported in each time instance in a CSI report (for example, in a case of FIG. 16A, FIG. 16B, or the like), the CRI/SSBRI may be indicated by the index of the CRI/SSBRI (determined by using higher layer signaling) in the CSI report or may be indicated by an index indicating a CRI/SSBRI defined in the CSI report. When it is indicated by the index indicating the CRI/SSBRI defined in the CSI report, the bit width of the index may be expressed by ceil (log₂ (number of CRIs or number of SSBRIs)). In this case, since a bit width based on the number of CRIs/number of SSBRIs to be reported in the CSI report is used, reporting is possible with a smaller number of bits than the number of bits for expressing the indices of (all) the CRIs/SSBRIs, which can reduce the overhead of the CSI report.

### {Aspect 2-2}

The UE may determine the ordering of correspondences between differential RSRPs/SINRs and CRIs/SSBRIs in a CSI report, based on a specific rule. The UE may determine the order of the differential RSRPs/SINRs, based on a specific rule.

The specific rule may be at least one of options 2-2-1 and 2-2-2 below, for example.

### <<Option 2-2-1>>

The order of differential RSRPs/SINRs may be determined based on the (magnitudes of) indices of the CRIs/SSBRIs.

For example, the order of the differential RSRPs/SINRs may be determined in ascending order (or descending order) from the lowest (or highest) index of the CRIs/SSBRIs corresponding to the differential RSRPs/SINRs.

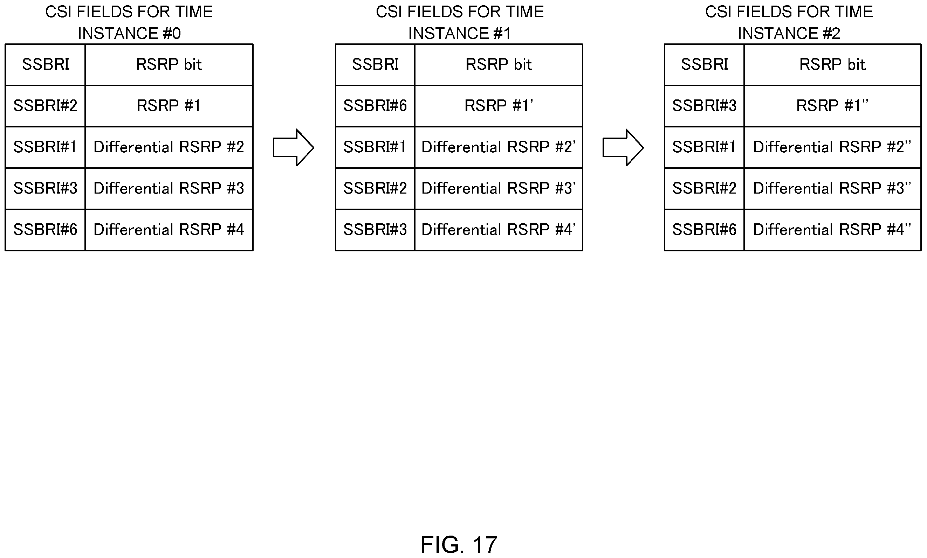

FIG. 17 is a diagram to show examples of ordering of RSRPs/SINRs according to option 2-2-1. In the example shown in FIG. 17, SSBRIs and RSRPs at each of a plurality of respective time instances (time instances #0 to #2) are presented.

In the example shown in FIG. 17, the UE has measured the RSRP corresponding to SSBRI #2 at time instance #0 as the largest RSRP (RSRP #1). Then, the UE has measured the RSRP corresponding to SSBRI #6 at time instance #1 as the largest RSRP (RSRP #1'). Further, the UE has measured the RSRP corresponding to SSBRI #3 at time instance #2 as the largest RSRP (RSRP #1").

Here, the differential RSRPs at each time instance in the CSI report are ordered in ascending order of the indices of the SSBRIs. For example, at time instance #0, the differential RSRPs are ordered in the order of SSBRIs #1, #3, and #6. For example, at time instance #1, the differential RSRPs are ordered in the order of SSBRIs #1, #2, and #3. For example, at time instance #2, the differential RSRPs are ordered in the order of SSBRIs #1, #2, and #6.

In this case, the ordering of the differential RSRPs may be determined independently of the magnitudes of the values of the differential RSRPs.

The ordering of the CRIs/SSBRIs in the CSI report may be the order of CRIs and SSBRIs or may be the order of SSBRIs and CRIs.

The ordering of the fields in the CSI report may be determined based on physical cell IDs (PCIs). For example, the fields in the CSI report may be ordered in ascending order (or descending order) of the physical cell IDs (PCIs). The order of the CSI fields may be determined based on the indices of the CRIs/SSBRIs in the same PCI.

### <<Option 2-2-2>>

The order of differential RSRPs/SINRs may be determined based on measurement results for the plurality of time instances.

For example, the order of differential RSRPs/SINRs at a certain time instance (for example, the first time instance) may be determined based on the RSRP/SINR/differential RSRPs/SINRs of the time instance (for example, the zeroth time instance) immediately before the certain time instance in terms of time.

For example, the UE may determine the order of the differential RSRPs/SINRs of the first instance by switching the positions of the RSRP/SINR/differential RSRPs/SINRs of the zeroth time instance.

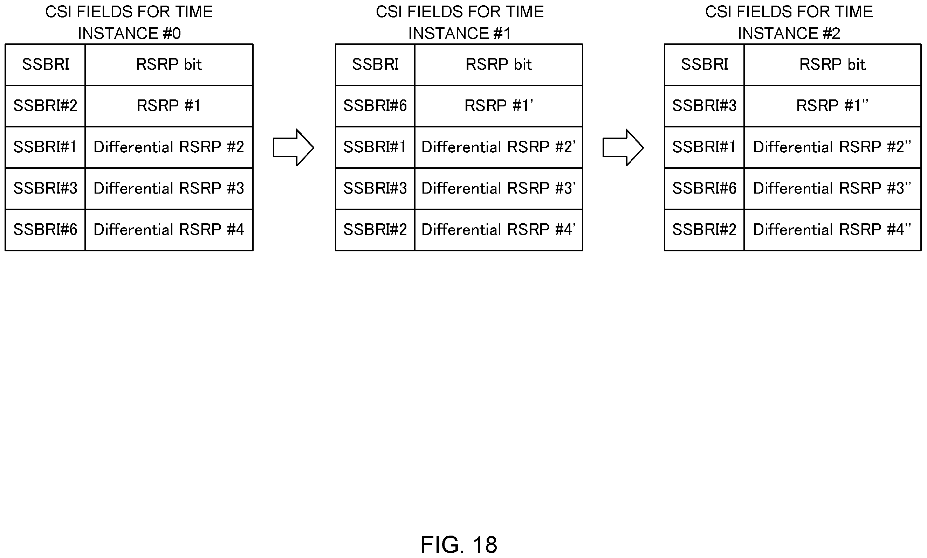

FIG. 18 is a diagram to show examples of ordering of RSRPs/SINRs according to option 2-2-2. In the example shown in FIG. 18, SSBRIs and RSRPs at each of a plurality of respective time instances (time instances #0 to #2) are presented.

In the example shown in FIG. 18, the UE has measured the RSRP corresponding to SSBRI #2 at time instance #0 as the largest RSRP (RSRP #1). Then, the UE has measured the RSRP corresponding to SSBRI #6 at time instance #1 as the largest RSRP (RSRP #1'). Further, the UE has measured the RSRP corresponding to SSBRI #3 at time instance #2 as the largest RSRP (RSRP #1").

Here, the differential RSRPs at each time instance in the CSI report are determined by switching the positions of the SSBRIs (and the RSRP/differential RSRPs) at the time instance immediately before the time instance. For example, at time instance #0, the differential RSRPs are ordered in the order of SSBRIs #1, #3, and #6.

For example, at time instance #1, since the SSBRI corresponding to the largest RSRP is SSBRI #6, ordering for time instance #1 is determined by switching the positions of SSBRI #2 and SSBRI #6 at time instance #0. The differential RSRPs are ordered in the order of SSBRIs #1, #3, and #2.

For example, at time instance #2, since the SSBRI corresponding to the largest RSRP is SSBRI #3, ordering for time instance #2 is determined by switching the positions of SSBRI #6 and SSBRI #3 at time instance #1.

According to aspect 2-2 above, even when the order of CRIs/SSBRIs at each time instance in a CSI report is determined separately, the ordering of CRIs/SSBRIs and measurement results can be performed appropriately.

### {Aspect 2-3}

In aspect 2-3, determination of a CRI and an SSBRI will be described.

The UE may determine a CRI/SSBRI to report, based on CSI.

The UE may determine a CRI/SSBRI to report, based on at least one of aspect 2-3-1 and aspect 2-3-2 below.

### {{Aspect 2-3-1}}

The UE may determine CRIs/SSBRIs to report, based on CSI at a specific number of (for example, X (X is a positive integer)) time instances.

X above may be defined in a specification in advance (choice 2-3-1-1). For example, X may be a specific value (for example, 1).

X above may be determined based on at least one of higher layer signaling (RRC signaling/MAC CE), DCI, and a specific rule (choice 2-3-1-2). When X is not configured/indicated, the UE may determine that X takes a specific (default) value defined in the specification in advance.

### {{Aspect 2-3-2}}

The UE may determine a specific number of (for example, X (X is a positive integer)) time instances to refer for determination of CRIs/SSBRIs.

The UE may determine a CRI/SSBRI to report, based on the specific X time instance(s) defined in the specification in advance (option 2-3-2-1). For example, the X time instance(s) may be the X most recent time instance(s).

The UE may be configured/notified about a specific time instance to refer for the determination of CRIs/SSBRIs (for example, by using higher layer signaling) (option 2-3-2-2). When the configuration/notification is not performed for the UE may determine a CRI/SSBRI, based on the specific time instance defined in a specification in advance.

The UE may be indicated about the specific time instance to refer for the determination of CRIs/SSBRIs (for example, by using a MAC CE/DCI). The UE may determine CRIs/SSBRIs to report, based on the indication.

In aspect 2-3, when CSI measurement is configured for a plurality of (X > 1) time instances, the UE may determine CRIs/SSBRIs to report, based on at least one of the mean value, the largest value, the smallest value, and a value obtained by any other computation of the L1-RSRPs/SINRs at the X time instances.

In this case, the UE may be configured with/notified of use of at least one of the mean value, the largest value, the smallest value, and a value obtained by another computation of the L1-RSRPs/SINRs for determination a CRI/SSBRI (for example, by using higher layer signaling).

According to aspect 2-3 above, it is possible to appropriately determine CRIs/SSBRIs to report for a plurality of time instances.

### {Aspect 2-4}

Aspect 2-4 relates to selection of beam measurement to report.

In aspect 2-4, the UE need not include measurement results of all the RS indices configured as reporting targets for a CSI report, in the CSI report.

The UE may select beam measurement to report, according to a configured RRC parameter. The UE may select an RS index (corresponding to an L1-RSRP) for the CSI report, based on the configured RRC parameter or a specific rule.

For example, the UE may select an RS index for the CSI report, based on the at least one of the following options:
- option 2-4-1: RS index determined randomly,
- option 2-4-2: RS index achieving the largest L1-RSRP,
- option 2-4-3: RS index having the L1-RSRP with the largest difference from an L1-RSRP reported previously, and
- option 2-4-4: RS index corresponding to the oldest reporting of the most recent L1-RSRP (in other words, an L1-RSRP is not reported for the longest period).

A base station that receives a CSI report including the RS index achieving the largest L1-RSRP can discover the RS corresponding to the largest L1-RSRP among measured RSs.

A base station that receives a CSI report including the RS index having the L1-RSRP with the largest difference from the L1-RSRP reported previously can preferentially track abrupt change of L1-RSRPs for all the measured RSs.

A base station that receives a CSI report including the RS index corresponding to the oldest reporting of the most recent L1-RSRP can preferentially track relatively new measurement values of L1-RSRPs for all the measured RSs.

The UE may include the measurement result (for example, L1-RSRP/SINR), the RS index, or the like) of the selected RS index (for example, a CSI-related quantity in the CSI report for transmission. Note that, when the UE reports about a plurality of RS indices, the UE may determine reporting-target RS indices in a method of selecting a first RS index from among RS indices that can be reported by using a CSI report, based on the above selection method, selecting a second RS index from among those remaining by excluding the first RS index from the RS indices that can be reported, based on the above selection method, ..., for example.

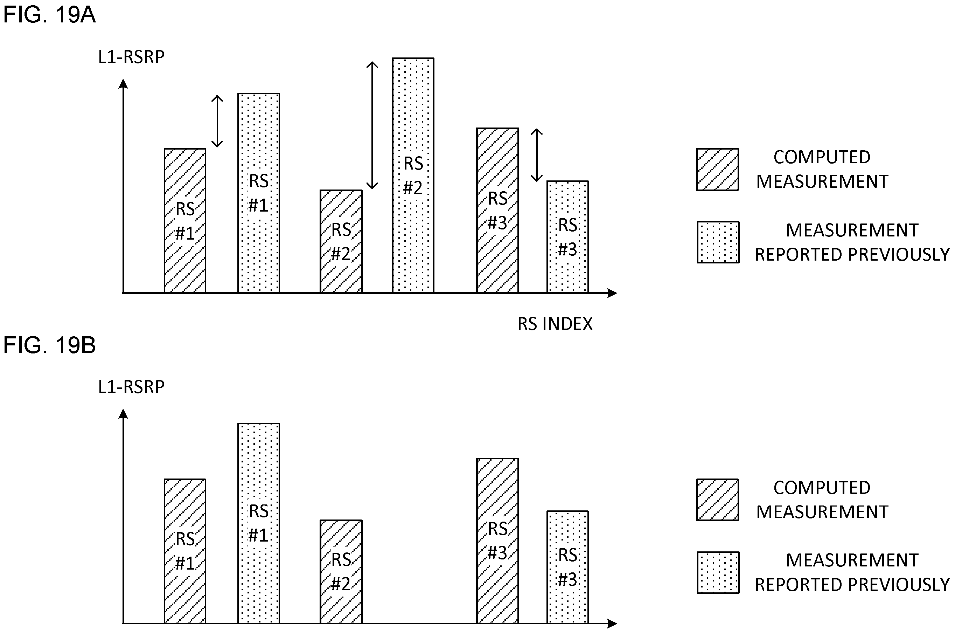

FIG. 19A and FIG. 19B are diagrams to show examples of selection of an RS to report, according to aspect 2-4. In the examples shown in FIG. 19A and FIG. 19B, the UE checks whether the index of an RS that achieves the X best beam(s) (highest (best) radio quality) is changed, and when the index is changed, the UE may report the RS achieving the X best beam(s) after the change (in other words, obtained by measurement by computation) in a CSI report.

In FIG. 19A, since the RS having the L1-RSRP with the largest difference from the L1-RSRP reported previously is RS #2 among three measured RSs (RSs #1 to #3), the UE may perform control to include the L1-RSRP of RS #2 in the CSI report for reporting.

In FIG. 19B, since the RS corresponding to the oldest reporting of the most recent L1-RSRP is RS #2 (no L1-RSRP reported previously is present) among the three measured RSs (RSs #1 to #3), the UE may perform control to include the L1-RSRP of RS #2 in the CSI report for reporting.

The UE may select a method of selecting an RS index for a CSI report, based on an RRC parameter indicating selection policy (for example, selectionPolicy).

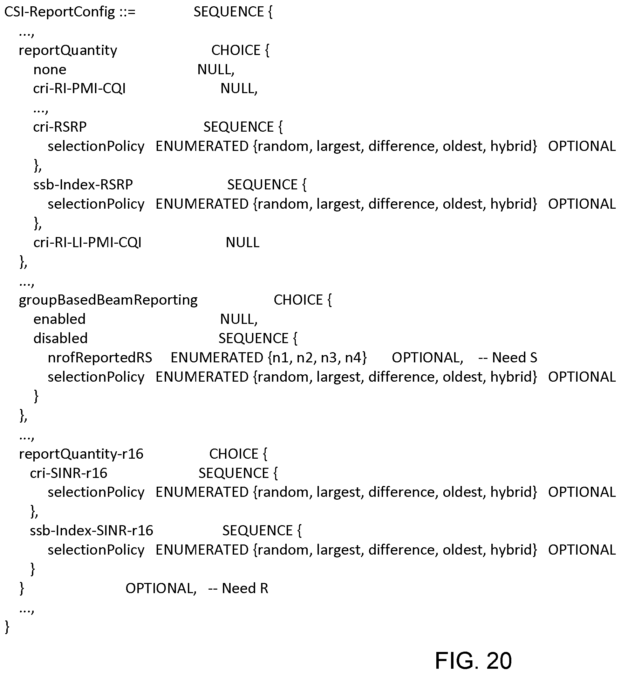

FIG. 20 is a diagram to show an example of an RRC parameter indicating selection policy according to aspect 2-4. This example is described by using Abstract Syntax Notation One (ASN.1) notation (note that this is merely an example and may hence not be a complete description). In this diagram, the meanings of RRC information elements/parameters having the same names as those of RRC information elements/parameters already defined in a specification of Rel-15/16 NR (TS 38.331) are naturally understood by those skilled in the art.

Note that, in the present disclosure, names of the RRC information elements, RRC parameters, and the like are not limited to these, and a suffix indicating introduction in a specific resource (for example, " _r18," -r18," or the like) may be attached, for example. The suffix does not need to be attached, or a different word may be attached.

The RRC parameter indicating selection policy may be included in a CSI report setting (CSI-ReportConfig information element). The RRC parameter indicating selection policy may be included in a parameter corresponding to an L1-RSRP/SINR report quantity (cri-RSRP, ssb-Index-RSRP, cri-SINR-r16, ssb-Index-SINR-r16) or may be included in an RRC parameter related to group-based beam reporting (groupBasedBeamReporting). Note that the RRC parameter indicating selection policy may be included in a different RRC parameter/information element for configuration.

In FIG. 20, an RRC parameter indicating selection policy is an enumerated value which can take any one of values {random, largest, difference, oldest, hybrid}. Here, random, largest, difference, and oldest may indicate options 2-4-1 to 2-4-4 described above, respectively. Hybrid may indicate a combination of two or more of options 2-4-1 to 2-4-4 described above.

Note that, when an RRC parameter indicating selection policy is not configured for a certain CSI report, the UE may determine a selection method according to default (or defined) selection policy (for example, any one of 2-4-1 to 2-4-4) for the CSI report.

According to aspect 2-4 above, a UE can appropriately report a beam measurement value useful for beam management using AI, for example.

### {Aspect 2-5}

Aspect 2-5 relates to a CSI report including a number of CSI-related quantities (L1-RSRPs/SINRs).

The UE may report CSI-related quantities (L1-RSRPs/SINRs) in a CSI report according to different granularities (for example, step size in decibel (dB), also referred to simply as a step size).

The UE may report absolute values of a plurality of L1-RSRPs or may report a plurality of difference values with respect to one absolute value, in a CSI report. Here, a step size of an absolute value and a difference value, a step size of a plurality of absolute values, a step size of a plurality of difference values, and the like may be different from each other.

The UE may report an absolute value for the largest L1-RSRP value and report a difference value from the largest L1-RSRP value for each of the other L1-RSRP values, in a CSI report.

The UE may determine a step size for L1-RSRP values based on a specific rule, based on physical layer signaling (for example, DCI), higher layer signaling (for example, RRC signaling, MAC CE), a specific signal/channel, or a combination of these, or based on UE capability.

For example, the UE may be configured with an RRC parameter indicating a step size to be used in the CSI report. The UE may be configured with separate step sizes or may be configured with a common (unified) step size for an absolute value and difference values of L1-RSRPs in the CSI report.

When the UE is configured with a specific RRC parameter (for example, selection policy = difference/oldest/hybrid), the UE may determine to report L1-RSRPs according to a relatively small step size.

The UE may determine a step size for L1-RSRPs, based on a range and the number of bits of an L1-RSRP value. When two of the range of an L1-RSRP value, the number of bits of an L1-RSRP, and the step size for L1-RSRPs are configured/defined, the UE may determine the remaining one, based on the two.

The UE may assume that the range of the largest L1-RSRP value is always a first range (for example, [-140, -44] dBm), and the range of the largest L1-SINR value is always a second range (for example, [-23, 40] dBm). Note that, in the present disclosure, a range may be defined by the maximum value and the minimum value or may be defined by the mean value (or median) and the largest possible difference with respect to the mean value (median).

The UE may assume that the range of L1-RSRP values may be a different range according to the step size/number of bits.

The UE may determine the range of an L1-RSRP value, based on a specific rule, based on physical layer signaling (for example, DCI), higher layer signaling (for example, RRC signaling, MAC CE), a specific signal/channel, or a combination of these, or based on UE capability.

The UE may assume that the bit number of an L1-RSRP value may be assumed to be always the same.

The UE may assume that the number of bits of an L1-RSRP value may be a different number of bits according to the step size/range.

The UE may determine the number of bits of an L1-RSRP value, based on a specific rule, based on physical layer signaling (for example, DCI), higher layer signaling (for example, RRC signaling, MAC CE), a specific signal/channel, or a combination of these, or may be determined based on UE capability.

A maximum number of L1-RSRP values (or RS indices) included in the CSI report may be determined based on at least one of selection policy indicated in aspect 2-4 and the range/number of bits/step size of L1-RSRP values.

For example, when the step size of the L1-RSRPs in the CSI report is twice (or half) of that of Rel-15/16 NR, the UE may be configured to include eight L1-RSRP values in the CSI report.

The number of RSs to be reported in a CSI report in an existing Rel-15/16 specification is configured by an RRC parameter nrofReportedRS also shown in FIG. 20. The number of RSs configured by this nrofReportedRS may be enhanced from four, which is the existing maximum number, and six, seven, eight, ten, and the like may be configurable, in the present disclosure.

The number of RSs thus configured may be the max number of RSs included in a CSI report, and the number of RSs to be reported in a CSI report may be reduced from this maximum number of RSs as mentioned in aspect 2-4, for example.

The UE may determine the number of L1-RSRP values (or RS indices) included in a CSI report, based on a specific rule, based on physical layer signaling (for example, DCI), higher layer signaling (for example, RRC signaling, MAC CE), a specific signal/channel, or a combination of these, or may be determined based on UE capability.

The UE may determine the (maximum) number of CSI-related quantities (L1-RSRPs/SINRs) included in a CSI report, based on whether to transmit the CSI report by using UCI or by using a MAC CE (CSI report MAC CE). For example, when a CSI report MAC CE is used, the UE may perform control to report a larger number of CSI-related quantities (L1-RSRPs/SINRs) than that of a case of transmitting a CSI report by using UCI. This takes into account that a PUSCH is more suitable for transmission of a large volume of data than a PUCCH is.

When a CSI report is transmitted by using UCI, the UE may determine the (maximum) number of CSI-related quantities (L1-RSRPs/SINRs) included in the CSI report, based on whether to transmit the UCI by using a PUSCH or by using a PUCCH.

Note that, in the present disclosure, determination of a step size may be performed based on the method to be described in aspect 3-2 below. Aspects 2-5 and 3-2 may be used in combination as long as no inconsistencies occur, or may be used individually.

According to aspect 2-5 above, a UE can appropriately determine the number of CSI-related quantities (L1-RSRPs/SINRS) to be included in a CSI report.

According to the second embodiment above, it is possible to appropriately determine a structure of a CSI report according to a plurality of time instances.

### <Third Embodiment>

A third embodiment relates to differential RSRPs/SINRs for a different time instance.

A UE may report differential RSRPs/SINRs referring to the RSRPs/SINRs at a different time instance.

The UE may report the differential RSRPs/SINRs, based on at least one of choices 3-1 and 3-2 to be described below.

### <<Choice 3-1>>

The UE may report the RSRP/SINR achieving the largest RSRP/SINR at a certain time instance, the CRI/SSBRI corresponding to the RSRP/SINR, and differential RSRPs/SINRs referring to the RSRP/SINR, among a plurality of (for example, all) time instances in a CSI report.

The UE may report the RSRP/SINR achieving the largest RSRP/SINR at a certain time instance, the CRI/SSBRI corresponding to the RSRP/SINR, and differential RSRPs/SINRs referring to the RSRP/SINR, in CSI reports associated with the same report configuration ID (reportConfigID).

The UE may include a field indicating the time instance having the CRI/SSBRI achieving the largest RSRP/SINR, in the CSI report, for transmission.

The bit width of the field may be defined in a specification in advance. For example, the bit width of the field may be determined based on at least one of X and Y described in the zeroth embodiment. The bit width of the field may be computed according to floor(log₂(X/Y)). Note that, in the present disclosure, floor(A) may indicate that A is multiplied by a floor. Alternatively, the bit width of the field may be computed according to ceil(log₂(X/Y)). Note that, in the present disclosure, ceil(A) may indicate that A is multiplied by a ceiling.

The UE may assume/determine the CRI/SSBRI achieving the largest RSRP/SINR at a specific time instance as a CRI/SSBRI (CRI/SSBRI #1) having a first index in the CSI report.

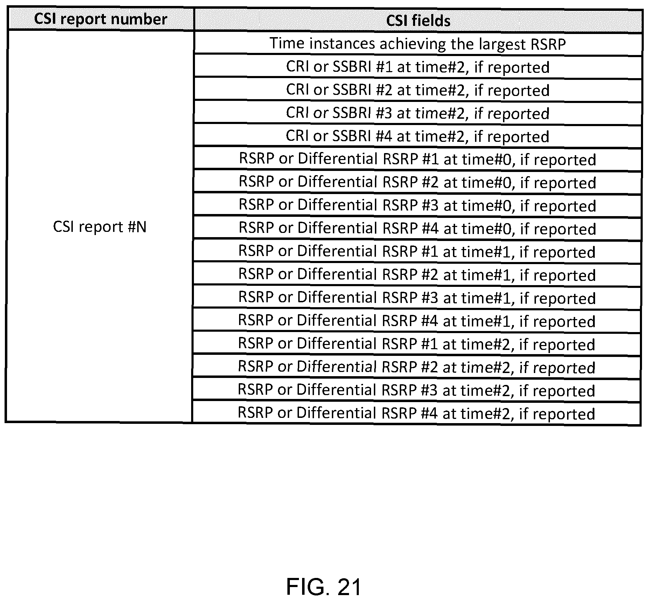

FIG. 21 is a diagram to show an example of a structure of a CSI report according to choice 3-1. In FIG. 21, the UE determines that the time instance achieving the largest RSRP is time instance #2 (time point #2). The UE includes a field indicating the time instance achieving the largest RSRP (which may be referred to as a time instance field, for example), in the CSI report. In this example, it is assumed that the field indicates time instance #2.

In the example shown in FIG. 21, fields indicating CRIs/SSBRIs (CRIs/SSBRIs #1 to #4) common to a plurality of time instances are included in the CSI report. These fields correspond to CRIs/SSBRIs #1 to #4 at the time instance (#2) indicated by the time instance field. The fields for an RSRP and differential RSRPs included in the CSI report are differential RSRP fields for time instances #0 and #1 and an RSRP field and differential RSRP fields for time instance #2. For time instance #2, among RSRP/differential RSRP fields #1 to #4, one field may be an RSRP field, and the other fields may be differential RSRP fields.

Note that, as described above, the bit width of the RSRP field and the bit width of each differential RSRP may be respective specific values (for example, 7 bits and 4 bits, respectively).

### <<Choice 3-2>>

The UE may report an RSRP/SINR at a specific time instance, the CRIs/SSBRIs corresponding to the RSRP/SINR, and differential RSRPs/SINRs referring to the RSRP/SINR, among a plurality of (for example, all) time instances in a CSI report.

The specific time instance may be determined irrespective of whether to include a CRI/SSBRI achieving the largest RSRP/SINR.

For example, the specific time instance may be determined based on at least one of higher layer signaling (RRC/MAC CE), DCI, and a specific rule.

For example, the specific time instance may be a time instance being the oldest (or newest) in terms of time among the time instances related to the CSI report.

For the value of each differential RSRP/SINR, both a positive value and a negative value may be supported. For differential RSRPs/SINRs each being between a positive value and a negative value will be described in aspect 3-2 below in detail.

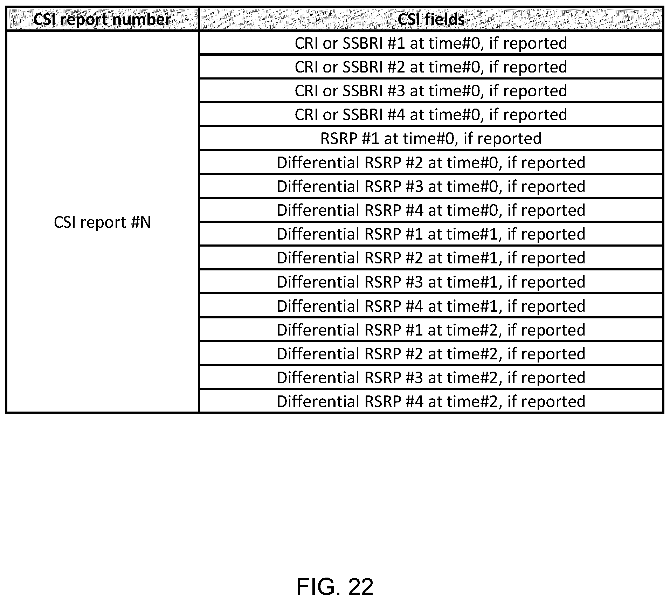

FIG. 22 is a diagram to show an example of a structure of a CSI report according to choice 3-2. In FIG. 22, the UE determines that the specific time instance is time instance #0 (time point #0).

In the example shown in FIG. 22, fields indicating CRIs/SSBRIs (CRIs/SSBRIs #1 to #4) common to a plurality of time instances are included in the CSI report. The fields for an RSRP and differential RSRPs included in the CSI report are an RSRP field and differential RSRP fields for time instance #0 and differential RSRP fields for time instances #1 and #2.

### {Aspect 3-1}

The UE may derive/report each differential RSRP/SINR with reference to a specific RSRP/SINR.

The UE may derive/report each differential RSRP/SINR, based on at least one of options 3-1-1 to 3-1-3 to be described below.

### <<Option 3-1-1>>

The UE may derive/report a plurality of (for example, all) differential RSRPs/SINRs in a CSI report with reference to one RSRP/SINR.

For example, the UE may determine an RSRP/SINR to refer, according to at least one of choices 3-1 and 3-2 described above. Note that the RSRP/SINR to refer may be referred to as a reference RSRP/SINR.

### <<Option 3-1-2>>

The UE may derive each differential RSRP/SINR in a CSI report with reference to an RSRP/SINR at the same time instance as that of the differential RSRP/SINR.

For example, the RSRP/SINR referred to at each time instance may be the largest RSRP/SINR at the time instance (option 3-1-2-1).

For example, the RSRP/SINR referred to at each time instance may be the RSRP/SINR corresponding to a specific CRI/SSBRI (option 3-1-2-2). The specific CRI/SSBRI may be a CRI/SSBRI having the lowest (or highest) index.

The UE may include an index (field) indicating the CRI/SSBRI being a reference destination for the calculation of each differential RSRP/SINR at each time instance, in the CSI report, for reporting.

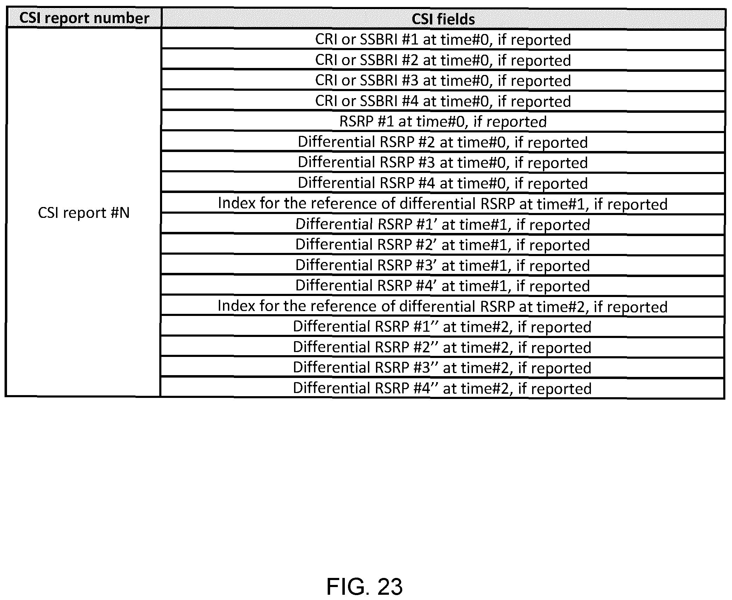

FIG. 23 is a diagram to show an example of a structure of a CSI report according to option 3-1-2. In the CSI report shown in FIG. 23, fields indicating CRIs/SSBRIs (CRIs/SSBRIs #1 to #4) common to a plurality of time instances are included in the CSI report.

In the CSI report, differential RSRPs #2 to #4 are calculated with reference to RSRP #1 for time instance #0 (time point #0).

For other time instances (time instances #1 (time point #1) and #2 (time point #2)), a field indicating the index of the CRI/SSBRI to refer is included in the CSI report, and each differential RSRP is calculated with reference to the RSRP corresponding to the indicated index for the same time instance.

### <<Option 3-1-3>>

The UE may derive each differential RSRP/SINR with reference to the RSRP/SINR of the same CRI/SSBRI at each time instance.

The RSRP/SINR referred to among those of the same CRI/SSBRI may be determined based on at least one of choices 3-1 and 3-2 described above.

The UE may report the time instance achieving the largest RSRP/SINR for each reported CRI/SSBRI.

The UE may derive/calculate each differential RSRP/SINR, according to at least one of options 3-1-3-1 and 3-1-3-2 below.

The UE may report an absolute RSRP/SINR (in other words, the value of the RSRP/SINR itself) for the RSRP/SINR to refer (option 3-1-3-1).

The UE may report a differential RSRP/SINR even for the RSRP/SINR to refer (option 3-1-3-2).

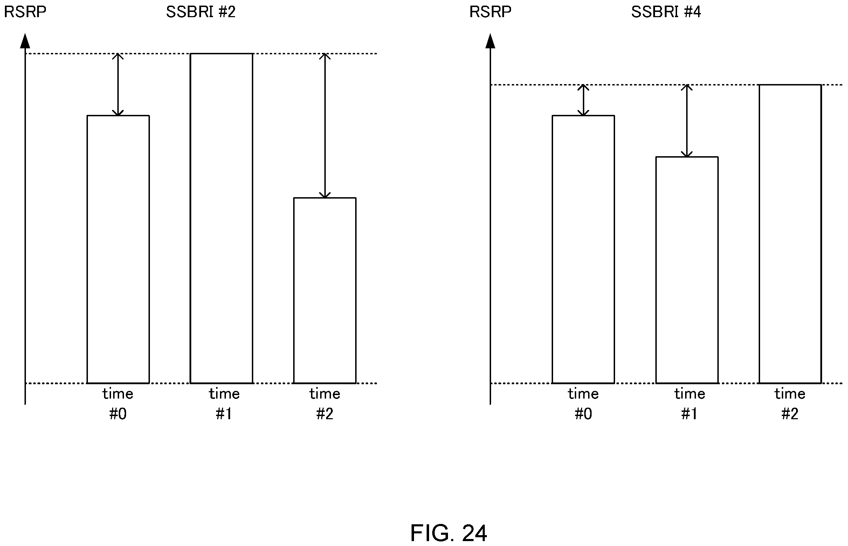

FIG. 24 is a diagram to show examples of derivation of differential RSRPs according to option 3-1-3. In the example shown in FIG. 24, a differential RSRP is derived for each (index of) SSBRI at each of a plurality of time instances (time points #0 to #2). For example, in the example shown in FIG. 24, the RSRP at time point #1 has the largest value for SSBRI #2, and the RSRP at time point #2 has the largest value for SSBRI #4.

In this case, for SSBRI #2, the UE calculates a differential RSRP for each of time point #0 and time point #2 by using the RSRP at time point #1 as the RSRP to refer. For SSBRI #4, the UE calculates a differential RSRP for each of time point #0 and time point #1 by using the RSRP at time point #2 as the RSRP to refer.

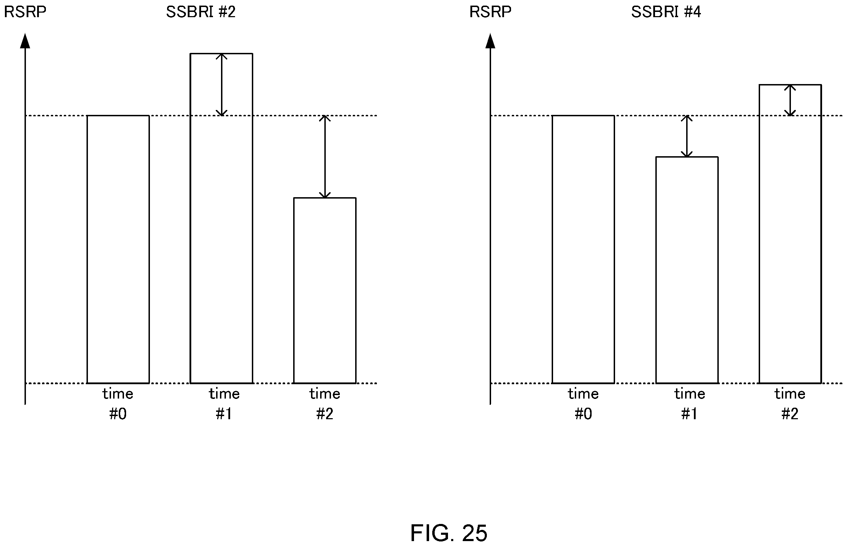

FIG. 25 is a diagram to show other examples of the derivation of differential RSRPs according to option 3-1-3. In the example shown in FIG. 25, a differential RSRP is derived for each (index of) SSBRI at each of a plurality of time instances (time points #0 to #2). The measurement result at each time instance is similar to that in FIG. 24.

In this case, the UE determines, for each SSBRI, the RSRP at a specific instance (time point #0 in FIG. 25) as a reference RSRP. Specifically, for each of SSBRIs #2 and #4, a differential RSRP for each of time point #1 and time point #2 is calculated by using the RSRP at time point #0 as the RSRP to refer.

According to aspect 3-1 above, it is possible to appropriately configure differential RSRPs/SINRs to be included in a CSI report.

### {Aspect 3-2}

As described above, in an existing specification, a report value defined by using a specific step size by using the largest RSRP/SINR as a reference is used for reporting of each differential RSRP/SINR.

However, it is not preferable to use existing associations related to differential RSRPs/SINRs in reporting of differential RSRPs/SINRs in each of the above-described embodiments.

Hence, in the present aspect, associations related to differential RSRPs/SINRs that enable implementation of each of the embodiments will be described.

For an RSRP/SINR/differential RSRPs/differential SINRs to be reported by the UE, at least one of a dB step size, a minimum value (for example, in units of dB) and a maximum value (for example, in units of dB) may be determined/judged based on at least one of higher layer signaling (RRC/MAC CE), DCI, and a specific rule defined in a specification.

If a differential value (dB) to be reported by the UE is larger than the determined maximum value, the UE may report (a report value corresponding to) the maximum value. If a differential value (dB) to be reported by the UE is smaller than the determined minimum value, the UE may report (a report value corresponding to) the minimum value.

The step size number (bits representing a differential RSRP/SINR) may be determined/judged based on at least one of higher layer signaling (RRC/MAC CE), DCI, and a specific rule defined in a specification.

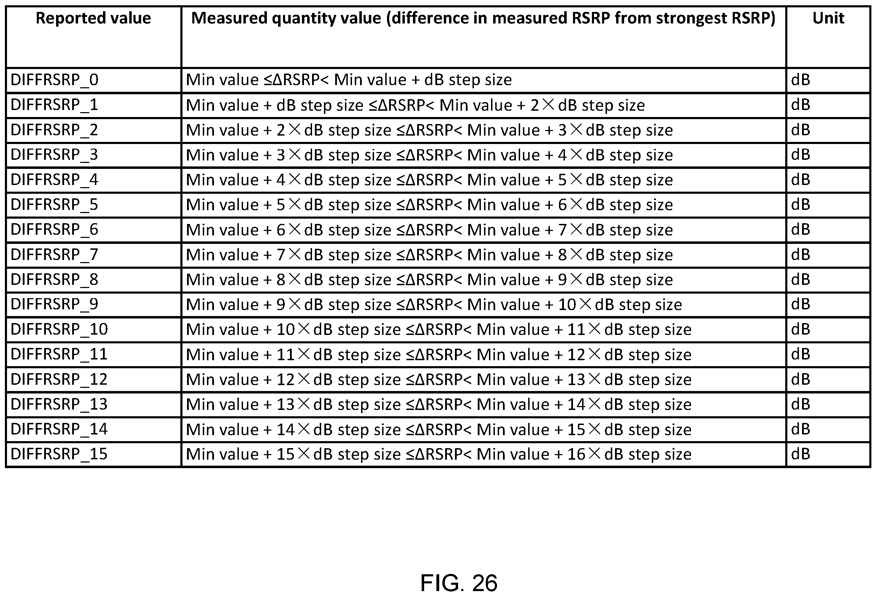

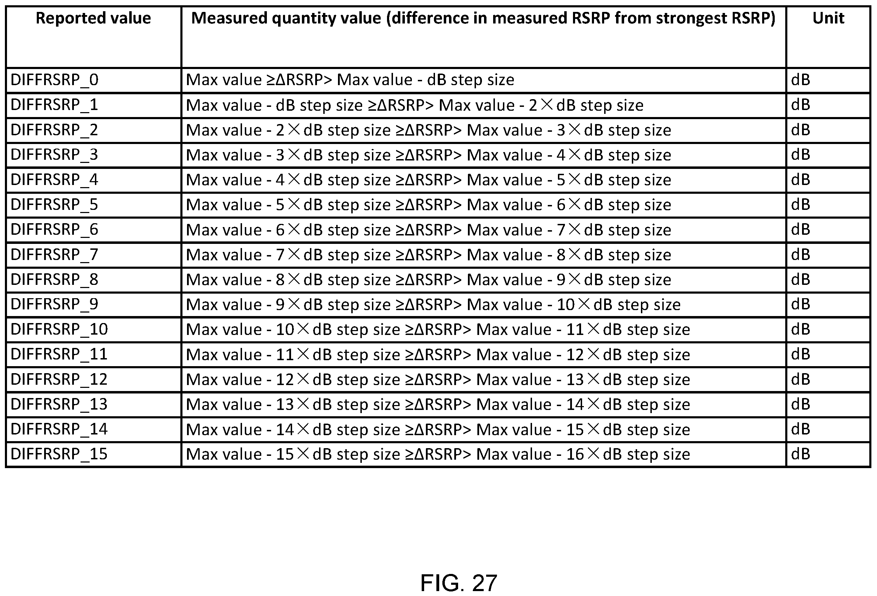

For example, the UE may report the differential RSRP(SINR), based on associations shown in at least one of FIG. 26 and FIG. 27.

The associations shown in FIG. 26 are associations for which the range of each measurement quantity value is defined based on the minimum value and the dB step size. In contrast, the association shown in FIG. 27 is association for which the range of a measurement quantity value is defined based on the maximum value and the dB step size.

Note that the associations shown in FIG. 26 and FIG. 27 are merely examples and are not restrictive. For example, the range of each measured quantity value may be defined based on the maximum value, the minimum value, and the dB step size.

According to aspect 3-2 above, it is possible to appropriately define associations to be used for reporting of differential RSRPs/SINRs.

### {Aspect 3-3}

The UE may quantize a report value of an RSRP/SINR/differential RSRPs/differential SINRs according to at least one of options 3-3-1 to 3-3-5 below.

### <<Option 3-3-1>>

When at least one of the above-described embodiments, the aspects in the embodiments, the options in the embodiments, and the choices in the embodiments is applied, the UE may use at least one of the methods described in aspect 3-2 above.

### <<Option 3-3-2>>

When a specific RRC parameter is configured for the UE, the UE may use at least one of the methods described in aspect 3-2 above.

### <<Option 3-3-3>>

When indication/notification using (a specific field of) a MAC CE/DCI is performed for the UE, the UE may use at least one of the methods described in aspect 3-2 above.

### <<Option 3-3-4>>

When a plurality of time instances are included in one piece of UCI/CSI report, the UE may use at least one of the methods described in aspect 3-2 above. For example, when only one time instance is included in one piece of UCI/CSI report, the UE may use a method defined in Rel. 15/16 or previous versions.

### <<Option 3-3-5>>

The UE may use a method of a combination of at least two of options 3-3-1 to 3-3-4 above.

When the conditions described in options 3-3-1 to 3-3-5 above are satisfied, the UE may apply different quantization processes even in the same UCI/CSI report. For example, the UE may determine to apply aspect 3-2 above to a time instance with differential RSRPs/SINRs that can include a positive value while applying a quantization method defined in Rel. 15/16 to a time instance with differential RSRPs/SINRs that cannot include any positive value.

When the conditions described in options 3-3-1 to 3-3-5 above are satisfied, the UE may apply a common quantization process in the same UCI/CSI report. For example, when differential RSRPs/SINRs can take a positive value in UCI/CSI report, the UE may determine to apply aspect 3-2 above.

According to the third embodiment above, it is possible to appropriately configure differential RSRPs/SINRs in UCI/CSI report.

### <Fourth Embodiment>

A fourth embodiment relates to determination of CSI-RS occasions/time instances to be included in UCI/CSI report.

The UE may determine occasions of CSI-RS resource to be used for calculation of CSI to report (aspect 4).

The UE may determine (the number of) time instances to be included in UCI/CSI report (associated with UCI/CSI report) (aspect 4').

The UE may determine the CSI-RS resource occasions/time instances according to at least one of options 4-1 to 4-3 to be described below.

### <<Option 4-1>>

The UE may determine at least one of occasions/time instances to be included in UCI/CSI report for each specific resource (time periodicity) and the number of occasions/number of time instances to be included in UCI/CSI report.

The specific resource (time periodicity) may be expressed using a specific number of (for example, X (X is a positive integer)) CSI-RS occasions/symbols/slots/sub-slots/subframes/ms. For example, the UE may determine each CSI-RS resource occasion as a time instance to be included in a CSI report.

The specific number may be defined in a specification in advance or may be configured/indicated/determined based on at least one of higher layer signaling (RRC/MAC CE), DCI, and a specific rule defined in a specification.

A start offset related to time instances to be included in a certain CSI report may be defined/configured/indicated. The reference of the start offset may be a time position (for example, symbol/slot/sub-slot) of a CSI reference resource related to the CSI report immediately before the certain CSI report. For example, the UE may receive offset information (RRC/MAC CE/DCI) indicating that the CSI reference resource related to the CSI report immediately before the certain CSI report is used as a reference and the time instance a specific resource(s) after the reference is selected.

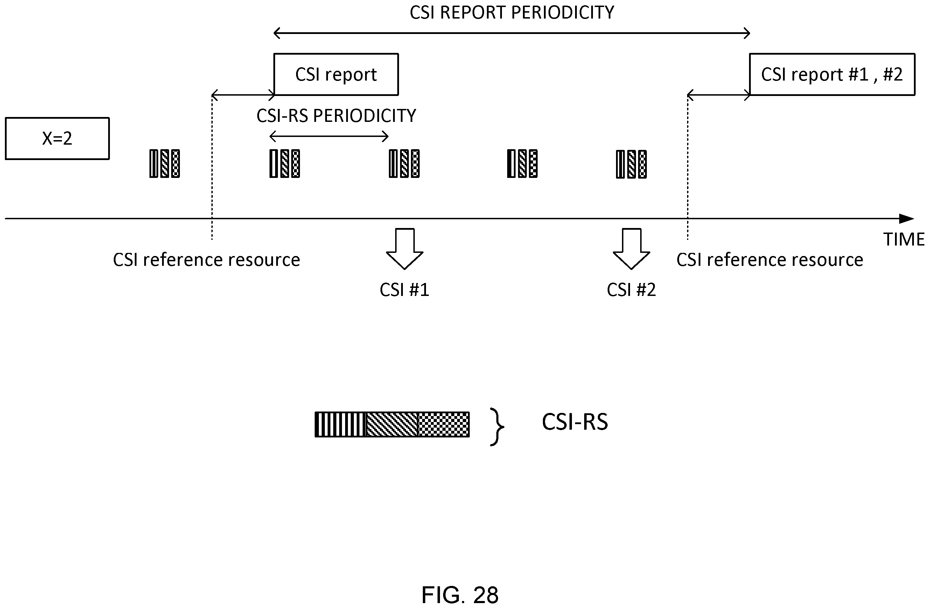

FIG. 28 is a diagram to show an example of determination of CSI-RS resource occasions according to option 4-1. The example shown in FIG. 28 indicates a case where X above is two. In the example shown in FIG. 28, a time instance is determined for every two CSI-RS resource occasions, and CSI at each determined time instance is measured/reported.

### <<Option 4-2>>

The UE may determine at least one of occasions/time instances to be included in UCI/CSI report and the number of occasions/number of time instances to be included in UCI/CSI report, based on occasions of CSI-RSs for transmission (which may be referred to as available occasions).

The UE may judge/determine the occasions of CSI-RSs for transmission, based on at least one of a specific RRC parameter, a field of a specific MAC CE, a field of a specific DCI (for example, DCI that triggers a corresponding CSI report/CSI-RS (triggering DCI)) (option 4-2-1) .

The specific parameter/field may be defined in a specification in advance. For example, the specific parameter may be at least one of a parameter related to TDD configuration, a parameter related to SSB, and a parameter related to measurement gap.

According to option 4-2-1, a UE and a network (for example, as base station) can have a common understanding about the number of occasions/time instances included in UCI. In particular, since a problem related to transmission/reception can be prevented from occurring for a value requiring a common understanding between a UE and a base station, such as the number of bits of UCI, it is possible to apply option 4-2-1 to thereby correctly perform decoding of DCI in the base station.

The UE may determine an occasion of each CSI-RS actually transmitted (or actually received by the UE) as an occasion/time instance to be included in a CSI report (option 4-2-2). Note that, in the present disclosure, a CSI-RS may be, for example, a P-/SP-CSI-RS, or transmission/reception of a CSI-RS at any timing may be omitted. The omission of transmission/reception may be determined in a specific rule or may be configured/indicated based on at least one of higher layer signaling (RRC/MAC CE) and DCI, or may be determined based on reported UE capability information.

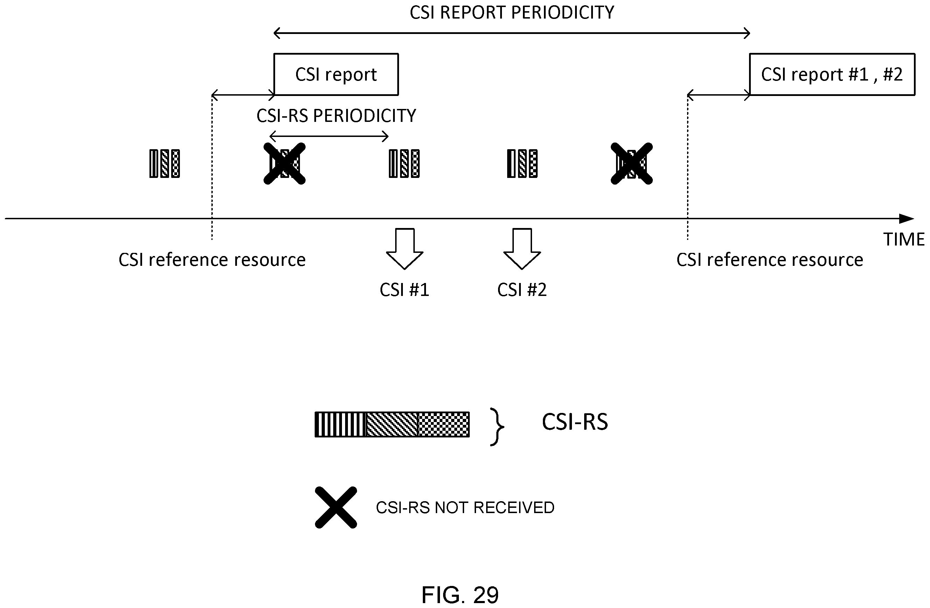

FIG. 29 is a diagram to show an example of determination of CSI-RS resource occasions according to option 4-2. In the example shown in FIG. 29, the UE determines the occasion/time instance of each received CSI-RS and measures/reports CSI at the determined time instance.

### <<Option 4-3>>

The UE may apply options 4-1 and 4-2 above in combination.

For example, the UE may calculate/derive/report CSI, based on a specific number of (for example, X) available CSI-RS occasions.

For example, for aspect 4 and aspect 4' above, at least one of options 4-1 and 4-2 above may be used in common. Alternatively, for example, for aspect 4 and aspect 4' above, separate options may be used from options 4-1 and 4-2 above.

The UE may report specific bit information when at least one of (occasions of) CSI-RSs to be used for calculation/derivation of CSI has failed to be received.

For example, when at least one of (occasions of) CSI-RSs to be used for calculation/derivation of CSI cannot be received, the UE may set a specific value (for example, all zero or one) in information (bit field) in the CSI report corresponding to the occasion for which reception has failed, to report the CSI report.

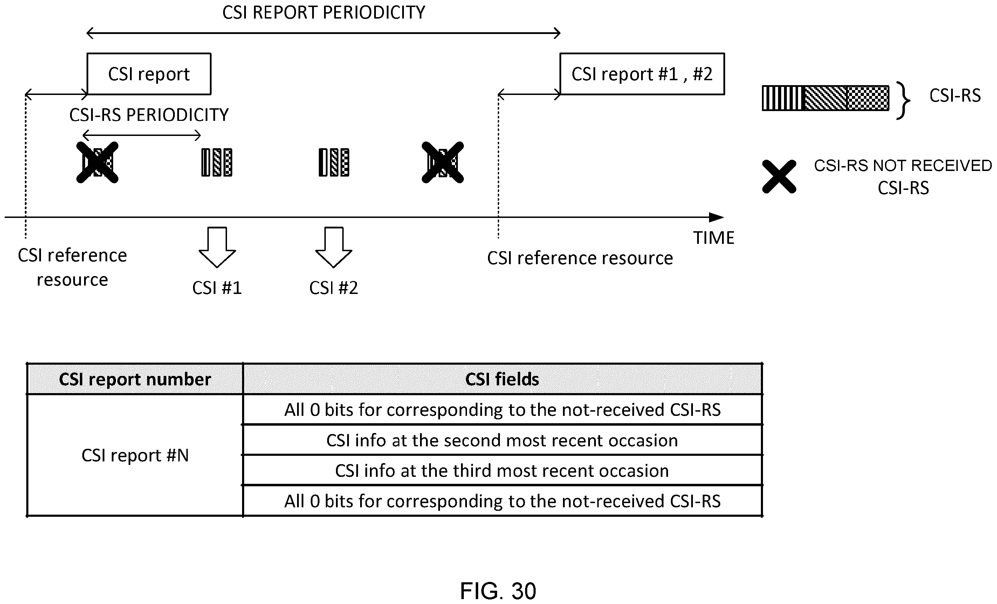

FIG. 30 is a diagram to show an example of determination of CSI-RS resource occasions according to option 4-3. In the example in FIG. 30, CSI is measured at each CSI-RS resource occasion to configure/indicate/determine to report a CSI report. The example shown in FIG. 30 shows that the UE has failed to receive a CSI-RS at the (first) newest CSI-RS resource occasion (first occasion) and a fourth newest CSI-RS resource occasion (fourth occasion).

In this case, the UE sets, at zero, all the values of information bits of a CSI field related to the first occasion and a CSI field related to the fourth occasion to be included in the CSI report and derives the CSI report.

According to the fourth embodiment above, it is possible to appropriately determine CSI-RS occasions/time instances to be included in UCI/CSI report.

### <Fifth Embodiment>

A fifth embodiment relates to reporting of determined CSI-RS resource occasions/time instances.

### <<Option 5-1>>

The UE may report CSI-RS resource occasions/time instances to be included in a CSI report.

For example, the UE may report about a specific number of (for example, X (X is a positive integer)) symbols/slots/sub-slots/subframes/ms/CSI-RS resource occasions not later than a CSI reference resource (most recent CSI-RS resource occasions not later than the CSI reference resource).

The specific number of symbols/slots/sub-slots/subframes/ms may be an offset between a CSI-RS (NZP CSI-RS/ZP CSI-RS/CSI-IM) and a resource for the CSI report.

The specific number of symbols/slots/sub-slots/subframes/ms may be an offset between a CSI-RS (NZP CSI-RS/ZP CSI-RS/CSI-IM) and a CSI reference resource.

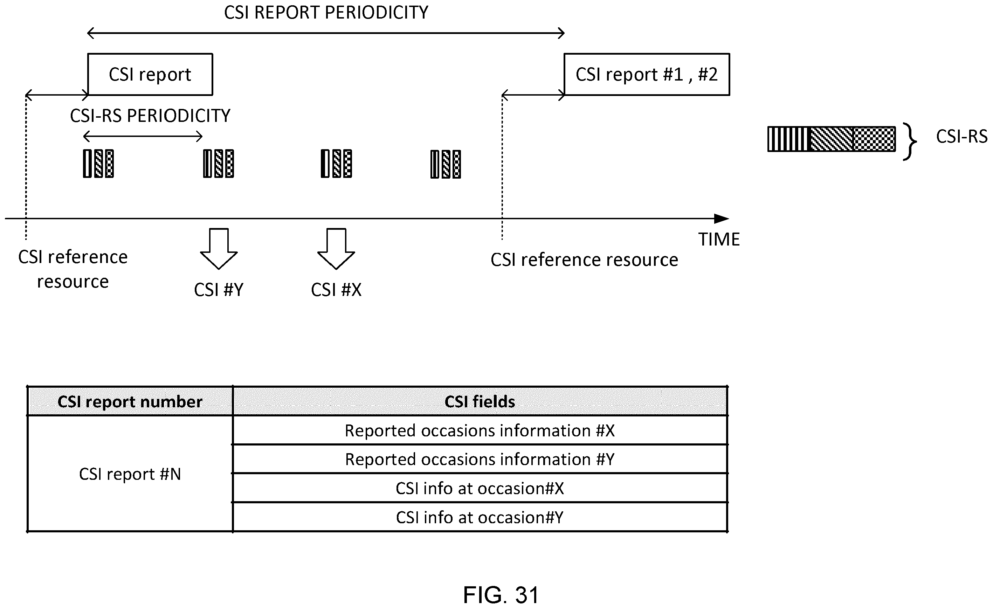

FIG. 31 is a diagram to show an example of determination of CSI-RS resource occasions according to option 5-1. In the example shown in FIG. 31, the UE measures CSI at the X-th and Y-th most recent CSI-RS resource occasions from the CSI reference resource for the CSI report. The example shown in FIG. 31 shows an example of X = 2 and Y = 3.

In the example shown in FIG. 31, the UE includes information related to occasions/time instances to report, in a CSI report, to derive the CSI report. The example shown in FIG. 31 shows that pieces of CSI at occasions #X and #Y are included in the CSI report.

Note that in the example shown in option 5-1 above and FIG. 31, reporting of the N-th occasion with respect to the CSI reference resource for a CSI report has been described. However, it may be configured to perform reporting for the N-th occasion with respect to the CSI reference resource immediately before the CSI reference resource.

### <<Option 5-2>>

The UE may include information indicating the time resource corresponding to the CSI-RS resource occasion/time instance to be included in a CSI report, in the CSI report, for transmission.

The time resource may be at least one of a subframe, a slot, and a symbol. For example, the UE may include at least one of a subframe index in a frame, the index of a slot in a subframe, and a symbol index in a slot, in the CSI report, for transmission.

Note that the UE may include at least one of information defined in at least one of options 5-1 and 5-2 above, an RSRP (differential RSRP)/SINR (differential SINR), and a CRI/SSBRI, in at least one of CSI part 1 and CSI part 2 and transmit the CSI report.

For example, the UE may report information defined in at least one of options 5-1 and 5-2 above and CRIs/SSBRIs in CSI part 1 (or CSI part 2) and may report RSRPs (differential RSRPs)/SINRs (differential SINRs) in CSI part 2 (or CSI part 1).

For example, the UE may report CRIs/SSBRIs and RSRPs (differential RSRPs)/SINRs (differential SINRs) at a certain time instance (for example, the oldest (or newest) time instance) in CSI part 1 (or CSI part 2) and may report CRIs/SSBRIs and RSRPs (differential RSRPs)/SINRs (differential SINRs) at a time instance other than the certain time instance in CSI part 2 (or CSI part 1).

According to the fifth embodiment above, it is possible to appropriately perform reporting of determined CSI-RS resource occasions/time instances.

### <Other Embodiments>

At least one of the above-described embodiments may be applied only to a UE that has reported a specific UE capability or that supports the specific UE capability.

The specific UE capability may be at least one of the following:
- whether to support a specific operation/information of each embodiment (for example, at least one of a CSI report including a plurality of time instances, ordering of RSRPs/SINRs, reporting of a plurality of time instances included in a CSI report, for AI-aided CSI feedback) and
- supported maximum X/Y value (described in each of the embodiments).

The UE capability may be reported for each frequency, may be reported for each frequency range (for example, Frequency Range 1(FR1), Frequency Range 2 (FR2), FR2-1, FR2-2), may be reported for each cell, or may be reported for each subcarrier spacing (SubCarrier Spacing

### (SCS)).

The UE capability may be reported for time division duplex (TDD) and frequency division duplex (FDD) in common or may be reported independently.

At least one of the above-described embodiments may be applied to a case where a UE is configured with specific information related to the above-described embodiment by higher layer signaling. For example, the specific information may be information indicating enabling of use of an AI model for CSI feedback, any RRC parameter for a specific release (for example, Rel. 18), or the like.

According to the other embodiments above, a UE can implement the above-described functions while maintaining compatibility with an existing specification.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

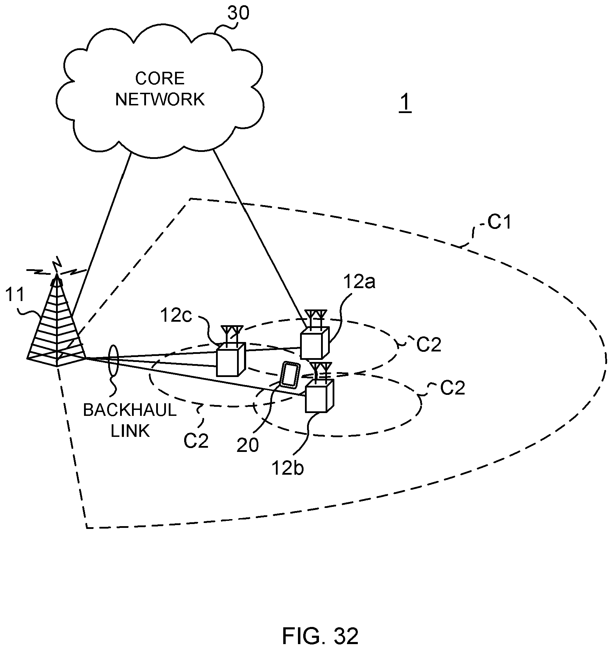

FIG. 32 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and DMRS for PBCH) may be referred to as an SS/PBCH block, an SS Block (SSB), and the like. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

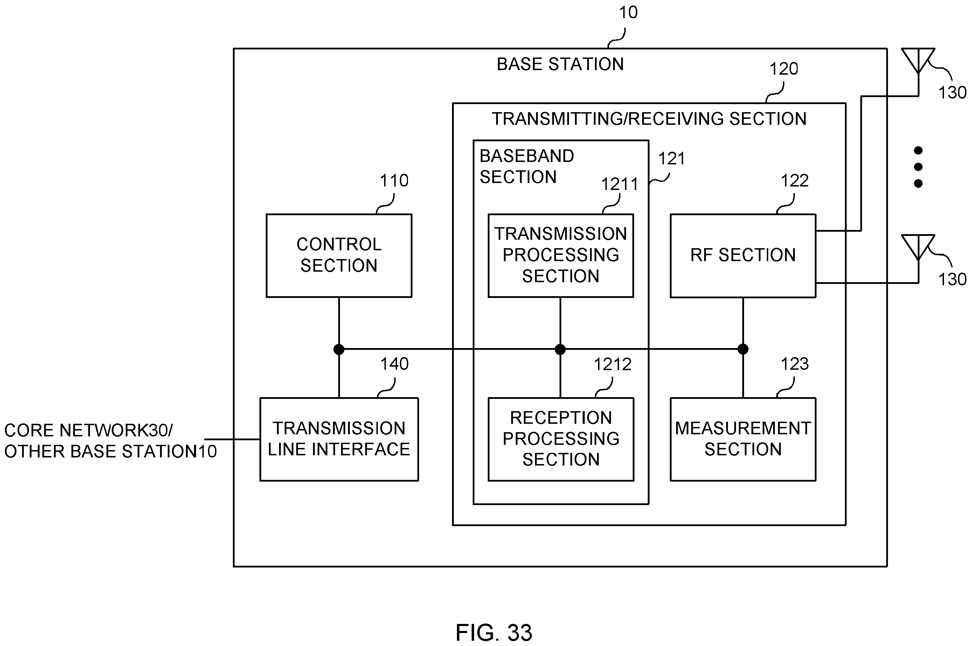

FIG. 33 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a reference signal for channel state information (CSI) measurement (for example, a CSI-RS, an SS/PBCH) at each of a plurality of occasions (CSI-RS resource occasions/time instances). The control section 110 may indicate derivation of a CSI report including pieces of CSI corresponding to the plurality of respective occasions (zeroth to third embodiments).

The control section 110 may indicate, among a plurality of transmission occasions (CSI-RS resource occasions/time instances) each corresponding to the reference signal (for example, a CSI-RS, an SS/PBCH) for channel state information (CSI) measurement, a plurality of specific occasions at each of which the reference signal is transmitted. The transmitting/receiving section 120 may transmit the reference signal at each of the plurality of specific occasion. The control section 110 may indicate derivation of a CSI report including pieces of CSI corresponding to the plurality of respective occasions (fourth and fifth embodiments).

### (User Terminal)

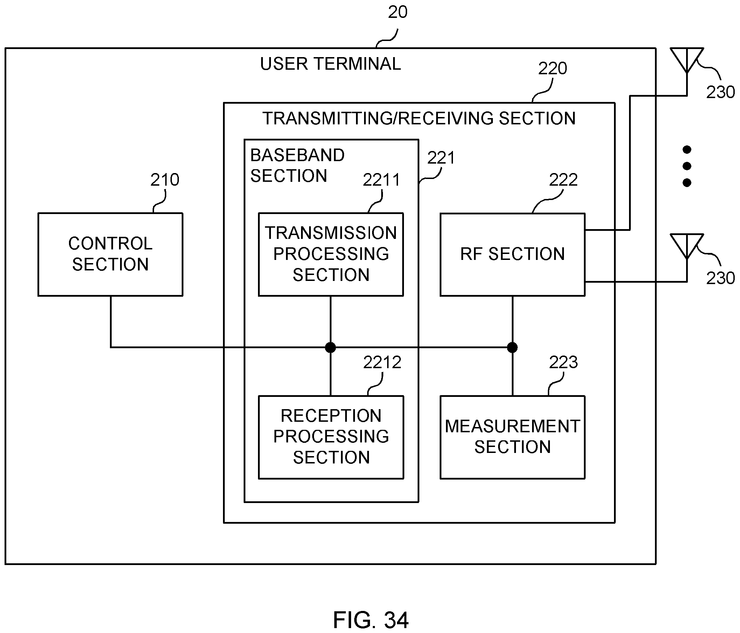

FIG. 34 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data, control information, and so on acquired from the control section 210, and may generate a bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a reference signal for channel state information (CSI) measurement (for example, a CSI-RS, an SS/PBCH) at each of a plurality of occasions. The control section 210 may control derivation of a CSI report including pieces of CSI corresponding to the plurality of respective occasions (zeroth to third embodiments).

The control section 210 may include a plurality of indicators (CRIs/SSBRIs) for the reference signals in a CSI report corresponding to a first occasion of the plurality of occasions, and include only an indicator corresponding to a largest measurement result (RSRP/SINR) in a second occasion of the plurality of occasions among the plurality of indicators, in a CSI report corresponding to the second occasion (second embodiment).

The control section 210 may include a plurality of indicators (CRIs/SSBRIs) for the reference signals, a largest measurement result (RSRP/SINR) and a measurement result of difference (differential RSRP/SINR) corresponding to each of the plurality of occasions, and only an indicator for the reference signal corresponding to the largest measurement result about an occasion other than a specific occasion among the plurality of indicators, in a CSI report including pieces of CSI corresponding to the plurality of respective occasions (second embodiment).

The control section 210 may include a plurality of indicators (CRIs/SSBRIs) for the reference signals and a plurality of measurement results of difference (differential RSRPs/SINRs) for a specific measurement result (RSRP/SINR) in a specific occasion of the plurality of occasions, in a CSI report including pieces of CSI corresponding to the plurality of respective occasions. The plurality of measurement results of difference may correspond to the plurality of respective occasions (third embodiment).

The control section 210 may determine, among a plurality of occasions (CSI-RS resource occasions/time instances) each corresponding to a reference signal (for example, a CSI-RS, an SS/PBCH) for channel state information (CSI) measurement, a plurality of specific occasions at each of which the reference signal is received. The transmitting/receiving section 220 may receive the reference signal at each of the plurality of specific occasions. The control section 210 may control derivation of a CSI report including pieces of CSI corresponding to the plurality of respective specific occasions (fourth and fifth embodiments).

The control section 210 may determine that the plurality of specific occasions are present with specific time periodicity (in every specific resource(s)) (fourth embodiment).

The control section 210 may determine the plurality of specific occasions, based on specific information related to the reference signals and included in higher layer signaling or downlink control information (fourth embodiment).

When a CSI report including pieces of CSI corresponding to the plurality of respective specific occasions is derived, the control section 210 may derive the CSI report including information indicating the plurality of specific occasions (fifth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

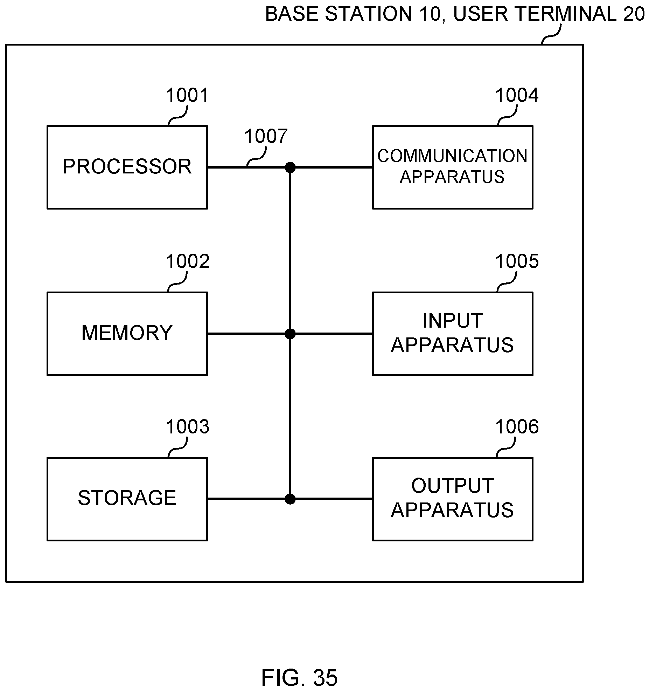

For example, a base station, a user terminal, and so on according to one embodiment of the present disclosure may function as a computer that executes the processes of the radio communication method of the present disclosure. FIG. 35 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110

(210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings.

For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. Since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

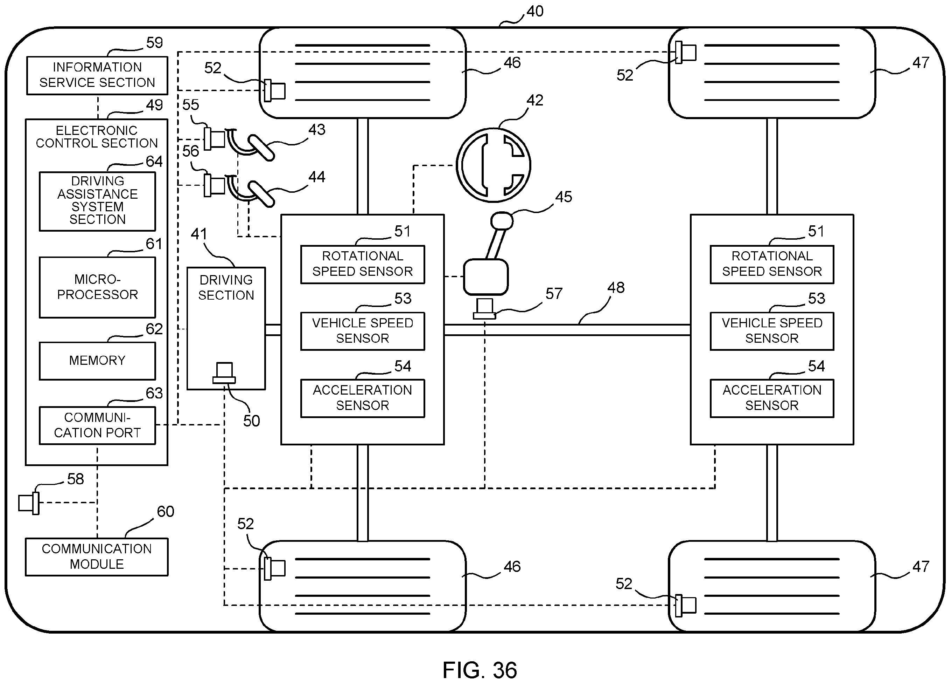

FIG. 36 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives a reference signal for channel state information (CSI) measurement at each of a plurality of occasions; and
a control section that controls derivation of a CSI report including pieces of CSI corresponding to the plurality of respective occasions.

2. The terminal according to claim 1, wherein
the control section includes a plurality of indicators for the reference signals in a CSI report corresponding to a first occasion of the plurality of occasions, and includes only an indicator corresponding to a largest measurement result in a second occasion of the plurality of occasions among the plurality of indicators, in a CSI report corresponding to the second occasion.

3. The terminal according to claim 1, wherein
the control section includes a plurality of indicators for the reference signals, a largest measurement result and a measurement result of difference corresponding to each of the plurality of occasions, and only an indicator for the reference signal corresponding to the largest measurement result about an occasion other than a specific occasion among the plurality of indicators, in a CSI report including pieces of CSI corresponding to the plurality of respective occasions.

4. The terminal according to claim 1, wherein
the control section includes, in a CSI report including pieces of CSI corresponding to the plurality of respective occasions, a plurality of indicators for the reference signals and a plurality of measurement results of difference for a specific measurement result at a specific occasion of the plurality of occasions, the plurality of measurement results of difference corresponding to the plurality of respective occasions.

5. A radio communication method for a terminal, the radio communication method comprising:
receiving a reference signal for channel state information (CSI) measurement at each of a plurality of occasions; and
controlling derivation of a CSI report including pieces of CSI corresponding to the plurality of respective occasions.

6. A base station comprising:
a transmitting section that transmits a reference signal for channel state information (CSI) measurement at each of a plurality of occasions; and
a control section that indicates derivation of a CSI report including pieces of CSI corresponding to the plurality of respective occasions.
